(19) Europäisches Patentamt
European Patent Office
Office européen des brevets

(11) **EP 4 701 303 A1**

(12) **EUROPEAN PATENT APPLICATION**
published in accordance with Art. 153(4) EPC

(43) Date of publication:
**25.02.2026 Bulletin 2026/09**

(21) Application number: **24809915.2**

(22) Date of filing: **05.01.2024**

(51) International Patent Classification (IPC):
***H04W 72/0457*** *(2023.01)*

(52) Cooperative Patent Classification (CPC):
**H04W 72/0446; H04W 72/0453; H04W 72/0457;
H04W 72/25**

(86) International application number:
**PCT/CN2024/070924**

(87) International publication number:
**WO 2024/239664 (28.11.2024 Gazette 2024/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.05.2023 CN 202310576915
12.07.2023 CN 202310861585**

(71) Applicant: **Huawei Technologies Co., Ltd.
Shenzhen, Guangdong 518129 (CN)**

(72) Inventors:
• **HE, Hongli**
  **Shenzhen, Guangdong 518129 (CN)**
• **LI, Xueru**
  **Shenzhen, Guangdong 518129 (CN)**
• **WEI, Xiuhong**
  **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **RESOURCE POOL CONFIGURATION METHOD, APPARATUS AND SYSTEM**

(57) This application relates to a resource pool configuration method, an apparatus, and a system. A first apparatus obtains first configuration information, where the first configuration information is used to configure a first resource pool for the first apparatus, the first resource pool is used by the first apparatus for positioning and/or sensing, the first resource pool includes at least one first interlaced structure in frequency domain, each first interlaced structure of the at least one first interlaced structure includes a plurality of interlaced units, and adjacent interlaced units in the plurality of interlaced units in each first interlaced structure are non-contiguous in frequency domain. The configured resource pool for positioning and/or sensing in embodiments of this application can ensure requirements of positioning services and/or sensing services, as well as requirements of communication services.

A first UE obtains first configuration information, where the first configuration information is used to configure a first resource pool for the first UE, the first resource pool is used by the first UE for positioning and/or sensing, the first resource pool includes at least one first interlaced structure in frequency domain, each first interlaced structure of the at least one first interlaced structure includes a plurality of interlaced units, and adjacent interlaced units in the plurality of interlaced units in each first interlaced structure are non-contiguous in frequency domain

S401

FIG. 4

EP 4 701 303 A1

**Description**

CROSS-REFERENCE TO RELATED APPLICATIONS

This application claims priorities to Chinese Patent Application No. 202310576915.6, filed with the China National Intellectual Property Administration on May 21, 2023 and entitled "RESOURCE POOL CONFIGURATION METHOD AND DEVICE", and to Chinese Patent Application No. 202310861585.5, filed with the China National Intellectual Property Administration on July 12, 2023 and entitled "RESOURCE POOL CONFIGURATION METHOD, APPARATUS, AND SYSTEM", which are incorporated herein by reference in their entireties.

TECHNICAL FIELD

This application relates to the field of communication technologies, and in particular, to a resource pool configuration method, an apparatus, and a system.

BACKGROUND

Currently, sidelink (sidelink, SL) mainly has a communication function, and a wireless sensing function may be incorporated into SL in the future evolution. Wireless sensing is an important technology underpinning smart home services. In wireless sensing, sending devices may radiate electromagnetic waves into the surrounding environment to send specific signals, and receiving devices may accordingly receive electromagnetic waves and signals reflected by the environment. The receiving and sending devices may comparatively analyze association relationships between the received signals and the sent signals, to infer related information of the ambient environment through analysis, for example, whether there is to-be-detected or to-be-sensed target objects in the environment.

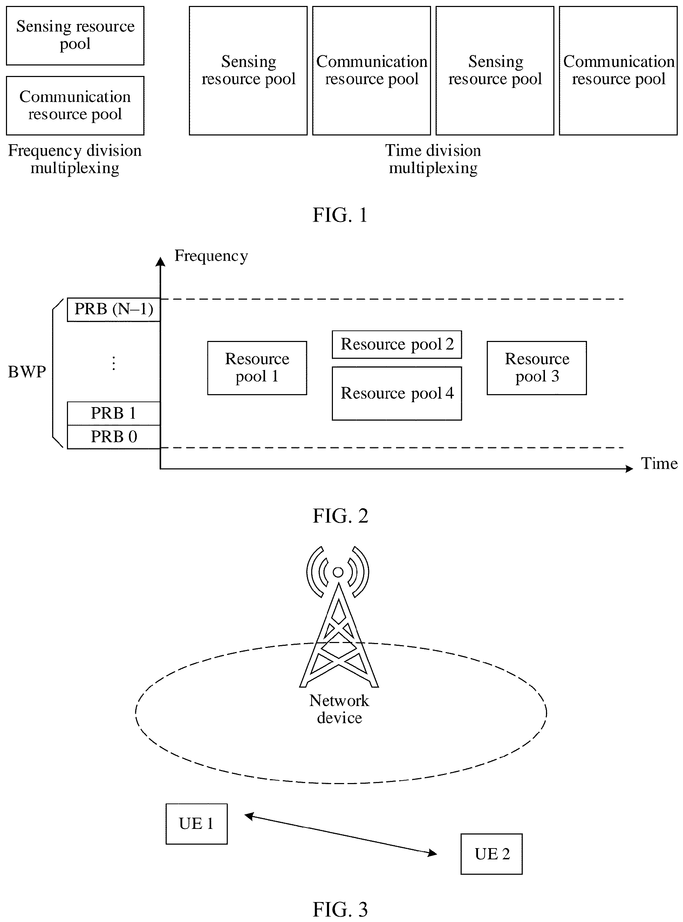

According to existing resource pool configuration methods, different resource pools may be configured within one carrier or bandwidth part (bandwidth part, BWP) for communication and sensing. Communication resource pools and sensing resource pools are orthogonal in time-frequency dimensions, making resources used by communication services and resources used by sensing services are orthogonal without interfering with each other. As shown in FIG. 1, sensing resource pools and communication resource pools within one BWP or carrier may be time division multiplexed (time domain multiplexing, TDM) or frequency division multiplexed (frequency domain multiplexing, FDM).

When the sensing resource pools and the communication resource pools are frequency division multiplexed, sensing services generally require a large bandwidth to ensure the resolution of distance estimation. Therefore, it is necessary to ensure that the sensing resource pools need to be provided with a large bandwidth, which impacts a system capacity for SL communication. When the sensing resource pools and the communication resource pools are time division multiplexed, if the sensing resource pools requires a large unambiguous Doppler (velocity) estimation range, the sensing resource pool needs to have a smaller repetition period in the time domain, which also impacts the system capacity for SL communication.

SUMMARY

Embodiments of this application provide a resource pool configuration method, an apparatus, and a system, to ensure a requirement of a sensing service and/or a requirement of a positioning service and ensure a requirement of a communication service.

According to a first aspect, a first resource pool configuration method is provided. The method may be performed by a first apparatus. The first apparatus is, for example, a positioning device or a sensing device, a device including a positioning function and/or a sensing function, or a chip system (or a chip) or another functional module. The chip system or the functional module can implement the positioning function and/or the sensing function. The chip system or the functional module is, for example, disposed in the positioning device or the sensing device or the device including the positioning function and/or the sensing function. The sensing device is, for example, a network device or a terminal device. The positioning device is, for example, a network device or a terminal device. The device including the positioning function and/or the sensing function is, for example, a network device or a terminal device. The method includes: obtaining first configuration information, where the first configuration information is used to configure a first resource pool for the first apparatus, the first resource pool is used by the first apparatus for positioning and/or sensing, the first resource pool includes at least one first interlaced structure in frequency domain, each first interlaced structure of the at least one first interlaced structure includes a plurality of interlaced units, and adjacent interlaced units in the plurality of interlaced units in each first interlaced structure are non-contiguous in frequency domain.

A first resource pool having an interlaced structure in frequency domain is configured for positioning and/or sensing. The interlaced structure can ensure that the resource pool for positioning and/or sensing has a wide bandwidth, and can improve a resolution of distance estimation. In addition, the interlaced structure occupies only a part of frequency resources in frequency domain, and the remaining frequency resources may be occupied by a communication resource pool. Therefore, a capacity of the communication resource pool can also be ensured. Furthermore, the resource pool for positioning and/or sensing includes at least one first interlaced structure in frequency domain, and may be contiguous in time domain. Therefore, a large unambiguous Doppler estimation range can be ensured. It can be learned that the configured resource pool for positioning and/or sensing in embodiments of this application can ensure requirements of positioning services and/or sensing services, as well as requirements of communication services.

In an optional implementation, in each first interlaced structure, any two adjacent interlaced units in the plurality of interlaced units have a same frequency spacing, or different adjacent interlaced units have different frequency spacings. A specific structure of the first interlaced structure is not limited in this embodiment of this application, and is flexible.

In an optional implementation, each interlaced unit of the plurality of interlaced units in each first interlaced structure includes one of the following: one PRB, one subcarrier, a plurality of contiguous PRBs, or a plurality of contiguous subcarriers. In this embodiment of this application, a frequency domain size of an interlaced unit is not limited either, and is relatively flexible.

In an optional implementation, the first configuration information includes one or more of the following: information about a start frequency position of one first interlaced structure; information about a size of a frequency resource included in one interlaced unit in one first interlaced structure; information about a frequency spacing between adjacent interlaced units in one first interlaced structure; a quantity of interlaced units included in one first interlaced structure; information about an end frequency position of one first interlaced structure; a quantity of the at least one first interlaced structure; information about a start frequency position of the first resource pool; information about an end frequency position of the first resource pool; or at least one interlace index, where the at least one interlace index is used to determine the at least one first interlaced structure. The foregoing information may be included in the first configuration information, or the first apparatus may obtain a part of the foregoing information in another manner. For example, this part of the foregoing information may be a preconfigured default value, so that content included in the first configuration information can be reduced, thereby reducing overheads of the first configuration information.

In an optional implementation, a frequency resource of the first resource pool is located on a first channel, and the first channel includes a plurality of second interlaced structures, where each interlace index of the at least one interlace index included in the first configuration information is associated with one second interlaced structure, and a frequency resource of the at least one second interlaced structure associated with the at least one interlace index includes a frequency resource of the at least one first interlaced structure in the first resource pool. In this embodiment of this application, the first interlaced structure may be a newly defined interlaced structure, or the first interlaced structure may be defined based on the second interlaced structure. For example, the second interlaced structure is located on the first channel, and a frequency resource included in the first interlaced structure may be a part or all of frequency resources in the second interlaced structure. The first interlaced structure is defined based on the existing second interlaced structure. This can simplify a configuration process of the first interlaced structure.

In an optional implementation, that the frequency resource of the at least one second interlaced structure associated with the at least one interlace index includes the frequency resource of the at least one first interlaced structure in the first resource pool includes: in the frequency resource of the at least one second interlaced structure associated with the at least one interlace index, a frequency resource between the start frequency position and the end frequency position of the first resource pool is the frequency resource of the at least one first interlaced structure. The second interlaced structure is located on the first channel, and frequency resources included in the second interlaced structure may be scattered on the first channel, and frequency resources included in the first interlaced structure are centralized in the first resource pool. In addition, because the first resource pool is usually located on the first channel, the first interlaced structure may include only a part of the frequency resources in the second interlaced structure. For example, if the frequency resource included in the second interlaced structure covers both a frequency resource inside the first resource pool and a frequency resource outside the first resource pool, in the frequency resources included in the second interlaced structure, a frequency resource inside the first resource pool may be a frequency resource of the first interlaced structure, and a frequency resource outside the first resource pool does not belong to the frequency resources of the first interlaced structure. In this way, the first interlaced structure can be determined.

In an optional implementation, the information about the start frequency position of the first interlaced structure includes information about a frequency spacing between the start frequency position of the first interlaced structure and a start frequency position of a first BWP, where the first BWP is a BWP in which the first resource pool is located. The start frequency position of the first interlaced structure may be the frequency spacing between the start frequency position of the first interlaced structure and the start frequency position of the first BWP. Because the start frequency position of the first BWP is known, the start frequency position of the first interlaced structure can be determined.

In an optional implementation, the information about the end frequency position of the first interlaced structure includes: information about a frequency spacing between the end frequency position of the first interlaced structure and an end frequency position of the first BWP; information about a frequency spacing between the end frequency position of the first interlaced structure and the start frequency position of the first interlaced structure; or information about a frequency spacing between the end frequency position of the first interlaced structure and the start frequency position of the first BWP, where the first BWP is a BWP in which the first resource pool is located. The end frequency position of the first interlaced structure may be represented in a plurality of manners. Regardless of which representation manner is used to determine the end frequency position of the first interlaced structure, different representation manners may be selected based on a scenario.

In an optional implementation, obtaining the first configuration information includes: receiving the first configuration information from a network device; and/or obtaining the first configuration information that is preconfigured. Alternatively, a part of information used to configure the first resource pool may be preconfigured, and the other information may be received from a network device.

According to a second aspect, a second resource pool configuration method is provided. The method may be performed by a second apparatus. The second apparatus is, for example, a communication device, a device including a communication function, or a chip system (or a chip) or another functional module. The chip system or the functional module can implement the communication function. The chip system or the functional module is, for example, disposed in the communication device. The communication device is, for example, a network device or a terminal device. The method includes: obtaining second configuration information, where the second configuration information is used to configure a second resource pool for the second apparatus, the second resource pool is used by the second apparatus for communication, the second configuration information includes information about a start frequency position of the second resource pool, information about an end frequency position of the second resource pool, and information about at least one third interlaced structure, and the second resource pool does not include a frequency resource of the at least one third interlaced structure in frequency domain.

In embodiments of this application, a first resource pool having an interlaced structure in frequency domain is configured for positioning and/or sensing. The interlaced structure can ensure that the resource pool for positioning and/or sensing has a wide bandwidth, and can improve a resolution of distance estimation. In addition, the interlaced structure occupies only a part of frequency resources in frequency domain, and the remaining frequency resources may be occupied by a communication resource pool. Therefore, a capacity of the communication resource pool can also be ensured. Furthermore, the resource pool for positioning and/or sensing includes at least one first interlaced structure in frequency domain, and may be contiguous in time domain. Therefore, a large unambiguous Doppler estimation range can be ensured. It can be learned that the configured resource pool for positioning and/or sensing in embodiments of this application can ensure requirements of positioning services and/or sensing services, as well as requirements of communication services. For the communication resource pool, resources in a sensing resource pool and/or a positioning resource pool may be excluded, to reduce resource collision between different types of UEs. In addition, a corresponding solution is provided for a communication process of a communication UE, so that the communication UE can perform communication by using the second resource pool of a new structure.

In an optional implementation, the method further includes: excluding the frequency resource of the at least one third interlaced structure between the start frequency position and the end frequency position of the second resource pool based on the second configuration information, to determine the second resource pool. The second resource pool does not include the at least one third interlaced structure, and the at least one third interlaced structure can be determined based on the second configuration information. Therefore, the second apparatus excludes the frequency resource of the at least one third interlaced structure between the start frequency position and the end frequency position of the second resource pool, so that the second resource pool or resources included in the second resource pool can be determined.

In an optional implementation, each third interlaced structure of the at least one third interlaced structure includes a plurality of interlaced units, and any two adjacent interlaced units in the plurality of interlaced units in each third interlaced structure have a same frequency spacing.

In an optional implementation, each interlaced unit of the plurality of interlaced units in each third interlaced structure includes one of the following: one PRB, one subcarrier, a plurality of contiguous PRBs, or a plurality of contiguous subcarriers.

In an optional implementation, the second configuration information further includes one or more of the following: information about a start frequency position of one third interlaced structure; information about an end frequency position of one third interlaced structure; information about a size of a frequency resource included in one interlaced unit in one third interlaced structure; information about a frequency spacing between adjacent interlaced units in one third interlaced structure; a quantity of the at least one third interlaced structure; a quantity of interlaced units included in one third interlaced structure; at least one interlace index, where the at least one interlace index is used to determine the at least one third interlaced structure.

In an optional implementation, a frequency resource of the second resource pool is located on a first channel, and the first channel includes a plurality of second interlaced structures, where each interlace index of the at least one interlace index included in the second configuration information is associated with one second interlaced structure, and a frequency resource of the at least one second interlaced structure associated with the at least one interlace index includes the frequency resource of the at least one third interlaced structure.

In an optional implementation, that the frequency resource of the at least one second interlaced structure associated with the at least one interlace index includes the frequency resource of the at least one third interlaced structure includes: in the frequency resource of the at least one second interlaced structure associated with the at least one interlace index, a frequency resource between the start frequency position and the end frequency position of the second resource pool is the frequency resource of the at least one third interlaced structure.

In an optional implementation, the information about the start frequency position of the second resource pool includes information about a frequency spacing between the start frequency position of the second resource pool and a start frequency position of a first BWP, where the first BWP is a BWP in which the second resource pool is located.

In an optional implementation, the information about the end frequency position of the second resource pool includes: information about a frequency spacing between the end frequency position of the second resource pool and an end frequency position of the first BWP; information about a frequency spacing between the end frequency position of the second resource pool and the start frequency position of the second resource pool; or information about a frequency spacing between the end frequency position of the second resource pool and the start frequency position of the first BWP, where the first BWP is a BWP in which the first resource pool is located.

In an optional implementation, the second resource pool includes N frequency resource units, the N frequency resource units are non-contiguous in frequency domain, and indexes of the N frequency resource units are $i_0$, $i_1$, ..., $i_{N-1}$, where N is a positive integer; and the second resource pool includes one or more subchannels, each subchannel of the one or more subchannels includes M frequency resource units in the N frequency resource units, where M is a positive integer less than or equal to N, and an $(f+1)^{th}$ subchannel in the one or more subchannels includes frequency resource units whose indexes are $i_{f \times M}$, $i_{f \times M+1}$, ..., $i_{f \times M+M-1}$, where f is an integer ranging from 0 to a quantity of the one or more subchannels minus 1. Because the at least one third interlaced structure is excluded between the start frequency position and the end frequency position of the second resource pool, frequency resources in the second resource pool may be non-contiguous, in other words, the N frequency resource units may be non-contiguous in frequency domain.

In an optional implementation, the method further includes: sending or receiving a first PSCCH and/or a first PSSCH on J subchannels, where each subchannel of the J subchannels includes M logical resource units, and each logical resource unit of the M logical resource units corresponds to one frequency resource unit of the N frequency resource units, where J is a positive integer; mapping the first PSCCH and the first PSSCH to $J \times M$ logical resource units included in the J subchannels; and mapping the first PSCCH and the first PSSCH to $J \times M$ frequency resource units based on a correspondence between the logical resource unit and the frequency resource unit. In this embodiment of this application, the second apparatus may reset an index for a frequency resource unit in the second resource pool, to map the frequency resource unit in the second resource pool to a logical resource unit or a virtual resource unit, so that a sidelink communication signal is sent and received through the logical resource unit or the virtual resource unit. For example, when receiving or sending a sidelink communication signal, the second apparatus may determine a logical resource unit occupied by the sidelink communication signal, map the sidelink communication signal to the logical resource unit, and map the sidelink communication signal to a corresponding frequency resource unit based on a correspondence between the logical resource unit and the frequency resource unit. Therefore, even if the frequency resources included in the second resource pool are non-contiguous, the second apparatus can still send and receive a sidelink communication signal on a resource in the second resource pool.

In an optional implementation, the second configuration information indicates that a PSCCH in the second resource pool includes K frequency resource units, where K is a positive integer, the first PSCCH occupies K frequency resource units on a first subchannel, the K frequency resource units are frequency resource units corresponding to K logical resource units with lowest frequencies in M logical resource units included on the first subchannel (or equivalent to K frequency resource units with lowest frequencies on the first subchannel), and the first subchannel is a subchannel with a lowest frequency in the J subchannels. A quantity of frequency resource units that should be occupied by the PSCCH in the second resource pool may be configured by using the second configuration information. When the PSCCH and the PSSCH are received and sent, start frequency positions of the PSCCH and the PSSCH may be the same. Therefore, the PSCCH may occupy a subchannel with a lowest frequency and a logical resource unit with a lowest frequency.

In an optional implementation, the second configuration information includes information indicating M, the second resource pool includes Q subchannels, where Q is a positive integer, a quantity of frequency resource units included in each subchannel of the Q subchannels is less than or equal to M, a $q^{th}$ subchannel in the Q subchannels includes a part or all of frequency resource units whose indexes are $(q-1) \times M$ to $q \times M$, and any subchannel of the Q subchannels does not include a frequency resource unit of any third interlaced structure of the at least one third interlaced structure. In this implementation, the second apparatus may not need to dispose a logical resource unit. This simplifies a disposing process. The subchannels in the second resource pool are still divided in an original manner. However, when a subchannel includes a resource that should be excluded (for example, includes a frequency resource belonging to the third interlaced structure), the resource should be excluded from the subchannel.

In an optional implementation, a first PSCCH and a first PSSCH are sent or received on J subchannels, where the J subchannels include E frequency resource units, and the E frequency resource units do not include a frequency resource unit of any third interlaced structure of the at least one third interlaced structure, where J and E are positive integers; and a transport block size TBS included in the first PSSCH is determined based on E. If the E frequency resource units include a frequency resource unit that belongs to the third interlaced structure, the frequency resource unit should be excluded. After the exclusion, the PSCCH and the PSSCH are sent and received on the remaining frequency resource units in the J subchannels, to ensure that a resource in the second resource pool instead of a resource in the third interlaced structure is occupied for sending and receiving of the sidelink communication signal.

In an optional implementation, the method further includes: skipping sending or skipping detecting a PSCCH on a second subchannel when a quantity of frequency resource units included in the second subchannel is less than K, where the second configuration information indicates that a PSCCH in the second resource pool includes K frequency resource units, where K is a positive integer. Because the at least one third interlaced structure is excluded, a quantity of frequency resource units included in some subchannels may decrease. If a quantity of frequency resource units included in one subchannel is less than a quantity of frequency resource units that should be occupied by the PSCCH, the subchannel may not be used for transmission of the PSCCH, and a receive end of the PSCCH does not need to detect the PSCCH on the subchannel, to ensure that the PSCCH has sufficient transmission resources.

In an optional implementation, obtaining the second configuration information includes: receiving the second configuration information from a network device; and/or obtaining the second configuration information that is preconfigured. Alternatively, a part of information used to configure the second resource pool may be preconfigured, and the other information may be received from a network device.

For technical effects of the second aspect or some optional implementations, refer to the descriptions of the technical effects of the first aspect or the corresponding implementations.

According to a third aspect, a communication apparatus is provided. The communication apparatus may be the first apparatus according to either of the first aspect and the second aspect. The communication apparatus has a function of the first apparatus. The communication apparatus is, for example, a sensing device, a large device including the sensing device, or a functional module in the sensing device, for example, a baseband apparatus or a chip system. Alternatively, the communication apparatus is, for example, a positioning device, a large device including the positioning device, or a functional module in the positioning device, for example, a baseband apparatus or a chip system. Alternatively, the communication apparatus is, for example, a device including a positioning function and/or a sensing function, a large device including the device including a positioning function and/or a sensing function, or a functional module in the device including a positioning function and/or a sensing function, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the processing unit is configured to obtain first configuration information, where the first configuration information is used to configure a first resource pool for the first apparatus, the first resource pool is used by the first apparatus for positioning and/or sensing, the first resource pool includes at least one first interlaced structure in frequency domain, each first interlaced structure of the at least one first interlaced structure includes a plurality of interlaced units, and adjacent interlaced units in the plurality of interlaced units in each first interlaced structure are non-contiguous in frequency domain.

In an optional implementation, the communication apparatus further includes a storage unit (also referred to as a storage module sometimes). The processing unit is configured to: be coupled to the storage unit, and execute a program or instructions in the storage unit, to cause the communication apparatus to execute a function of the first apparatus according to either of the first aspect and the second aspect.

According to a fourth aspect, a communication apparatus is provided. The communication apparatus may be the second apparatus according to either of the first aspect and the second aspect. The communication apparatus has a function of the second apparatus. The communication apparatus is, for example, a communication device, a large device including the communication device, or a functional module in the communication device, for example, a baseband apparatus or a chip system. In an optional implementation, the communication apparatus includes a baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions in the fifth aspect.

In an optional implementation, the processing unit is configured to obtain second configuration information, where the second configuration information is used to configure a second resource pool for the second apparatus, the second resource pool is used by the second apparatus for communication, the second configuration information includes information about a start frequency position of the second resource pool, information about an end frequency position of the second resource pool, and information about at least one third interlaced structure, and the second resource pool does not include a frequency resource of the at least one third interlaced structure in frequency domain.

In an optional implementation, the communication apparatus further includes a storage unit (also referred to as a storage module sometimes). The processing unit is configured to: be coupled to the storage unit, and execute a program or instructions in the storage unit, to cause the communication apparatus to execute a function of the second apparatus according to either of the first aspect and the second aspect.

According to a fifth aspect, a communication apparatus is provided. The communication apparatus may be a first apparatus. For example, the communication apparatus is a sensing device, or a chip or chip system used in the sensing device. Alternatively, the communication apparatus is, for example, a positioning device, or a chip or chip system used in the positioning device. Alternatively, the communication apparatus is, for example, a device including a positioning function and/or a sensing function, or a chip or chip system used in the device including a positioning function and/or a sensing function. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the first apparatus in the foregoing aspects.

According to a sixth aspect, a communication apparatus is provided. The communication apparatus may be a first apparatus. For example, the communication apparatus is a communication device, or a chip or chip system used in the communication device. The communication apparatus includes a communication interface and a processor, and optionally, further includes a memory. The memory is configured to store a computer program. The processor is coupled to the memory and the communication interface. When the processor reads the computer program or instructions, the communication apparatus is caused to perform the method performed by the second apparatus in the foregoing aspects.

According to a seventh aspect, a communication system is provided, including a first apparatus and a second apparatus. The first apparatus is configured to perform the method performed by the first apparatus in the foregoing aspects, and the second apparatus is configured to perform the method performed by the second apparatus in the foregoing aspects. For example, the first apparatus may be implemented by the communication apparatus according to the third aspect or the fifth aspect, and the second apparatus may be implemented by the communication apparatus according to the fourth aspect or the sixth aspect.

According to an eighth aspect, a computer-readable storage medium is provided. The computer-readable storage medium is configured to store a computer program or instructions; and when the computer program or the instructions are run, the method performed by the first apparatus or the second apparatus in the foregoing aspects is implemented.

According to a ninth aspect, a computer program product including instructions is provided. When the computer program product runs on a computer, the method in the foregoing aspects is implemented.

According to a tenth aspect, a chip system is provided, including a processor and an interface. The processor is configured to invoke instructions from the interface and run the instructions, to cause the chip system to implement the method in the foregoing aspects.

BRIEF DESCRIPTION OF DRAWINGS

FIG. 1 is a diagram of time division multiplexing or frequency division multiplexing of a sensing resource pool and a communication resource pool;
FIG. 2 is a diagram of configuring a resource pool for a UE in one BWP;
FIG. 3 is a diagram of a communication network architecture to which an embodiment of this application is applicable;
FIG. 4 is a flowchart of a resource pool configuration method according to an embodiment of this application;
FIG. 5 is a diagram of one first interlaced structure according to an embodiment of this application;
FIG. 6 is a diagram of one first interlace according to an embodiment of this application;
FIG. 7A is a diagram of a second interlaced structure according to an embodiment of this application;
FIG. 7B is a diagram of a first interlace included in a first resource pool according to an embodiment of this application;
FIG. 8 is a flowchart of another resource pool configuration method according to an embodiment of this application;
FIG. 9 is a diagram of a second resource pool according to an embodiment of this application;
FIG. 10A is a diagram of LRB division according to an embodiment of this application;
FIG. 10B is a diagram of mapping based on LRBs according to an embodiment of this application;

FIG. 11 is a diagram of mapping based on non-contiguous PRBs in a second resource pool according to an embodiment of this application;

FIG. 12 is a diagram of an apparatus according to an embodiment of this application; and

FIG. 13 is a diagram of another apparatus according to an embodiment of this application.

DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, and are not intended to limit sizes, content, an order, a time sequence, priorities, importance, or the like of the plurality of objects. For example, a first interlaced structure and a second interlaced structure may be a same interlaced structure, or may be different interlaced structures. In addition, the names do not indicate that occupied resources, sizes, application scenarios, priorities, importance, or the like of the two interlaced structures are different. In addition, step numbers in embodiments described in this application are merely intended to distinguish between different steps, but are not intended to limit a sequence of the steps. For example, S801 may be performed before S802, may be performed after S802, or may be simultaneously performed with S802.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, and includes, for example, but is not limited to terminal devices in the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, a smart office, smart wearable, smart transportation, a smart city (smart city), an uncrewed aerial vehicle, and a robot. The terminal device may be sometimes referred to as a user equipment (user equipment, UE), a terminal, an access station, a UE station, a remote station, a wireless communication device, a user apparatus, or the like.

In embodiments of this application, a sensing device may be configured to implement a sensing function. The sensing device may include a network device (or referred to as a sensing network device), a terminal device (or referred to as a sensing terminal device), or the like. In this specification, the sensing terminal device is mainly used as an example for description. For example, a first apparatus in the following may be a sensing terminal device. However, this is not limited thereto. For example, the first apparatus may alternatively be a network device.

In embodiments of this application, a communication apparatus configured to implement a function of the terminal device may be a terminal device, or may be an apparatus, for example, a chip system, that can support the terminal device in implementing the function. The apparatus may be mounted in the terminal device. For example, in embodiments of this application, the first apparatus may implement a function of a first terminal device, the second apparatus may implement a function of a second terminal device, the first apparatus may be a terminal device or an apparatus supporting the terminal device in implementing the function, and the second apparatus may be a terminal device or an apparatus supporting the terminal device in implementing the function. In the technical solutions provided in embodiments of this application, an example in which the apparatus configured to implement the function of the terminal device is a terminal device is used to describe the technical solutions provided in embodiments of this application. For example, descriptions are provided below by using an example in which the first apparatus is a first terminal device and the second apparatus is a second terminal device. In addition, for ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station evolved after the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). Descriptions are provided below by using an example in which the access network device is a base station. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, an example in which the apparatus configured to implement the function of the network device is a network device is used to describe the technical solutions provided in embodiments of this application.

In wireless sensing, a sending device may radiate an electromagnetic wave (for example, send a specific radio frequency signal) to an ambient environment, a receiving device may correspondingly receive an electromagnetic wave and a signal that are reflected by the environment, and the receiving and sending devices may comparatively analyze an association relationship between the received signal and the sent signal, to obtain related information of the ambient environment through analysis, for example, obtain, through analysis, whether there is a to-be-detected or to-be-sensed target object in the environment, distances between a scatterer and the receiving and sending devices, orientations or angles (including orientations or angles in a horizontal direction or a vertical direction) of a scatterer relative to the receiving and sending devices, or a moving speed of a scatterer relative to the receiving and sending devices. In a home environment, intruder detection may be performed through wireless sensing. For example, a person entering a room may be identified through comparative analysis of received and sent signals, and other features of the received signal, for example, Doppler and the like are further analyzed to identify that the person is not a member of the family. If the person is not a member of the family, an alarm may be sent to the public security bureau or a family member. Alternatively, when a user experiences multimedia entertainment in a home environment, a position of the user may be identified and tracked through wireless sensing, distribution of a sound field of a stereo is dynamically adjusted based on the position of the user, and a direction, strength, and the like of a light are adjusted, to adapt to an atmosphere of entertainment content, and the like.

In scenarios such as a smart home and the like, sensing may be performed based on an existing SL communication system. The SL communication system is a system that can implement direct communication between devices. Compared with conventional network device-based cellular communication, SL communication has advantages such as a low latency, high efficiency, simple deployment, and independence from the network device. In scenarios such as a smart home and the like, the network device is generally not deployed indoors. In addition, even if the network device is deployed, performance of sensing performed by using the network device cannot be ensured due to a sensing distance, wall blocking, or the like. Therefore, it may be considered that a terminal device is used for sensing, including a plurality of sensing modes such as self-sending and self-receiving by one terminal device, sending by one terminal device and receiving by another terminal device, and sending by one terminal device and receiving by a plurality of terminal devices. Because sensing is performed by using a terminal device, and there is a requirement for integrated sensing and communication in future 5.5G and even 6G, sensing may be performed based on the existing SL communication system.

In the existing SL system, a BWP is configured for the UE, and configuration information of the BWP includes a start frequency position and a bandwidth size of the BWP, and is used to determine an operating frequency range of the UE. In one BWP, one or more resource pools (resource pools, RPs) may be configured for the UE, to determine a frequency resource and a time domain resource that are occupied by an SL signal, as shown in FIG. 2. Configuration information of each RP may indicate slots (slots) included in the RP in time domain and an orthogonal frequency division multiplexing (orthogonal frequency division multiplexing, OFDM) symbol (symbol) that can be used in each slot. Generally, the configuration information of the RP may include a bitmap (bitmap). A length of the bitmap corresponds to a quantity of slots included in one periodicity. A value of each bit in the bitmap is 1 or 0, and may indicate whether a corresponding slot in the periodicity is a slot included in the RP. For example, if the configuration information of the RP includes a bitmap whose length is 8, namely, 01001111, it may be determined that the RP includes slots 2, 5, 6, 7, 8, 10, 13, 14, 15, and 16 in time domain. In other words, the UE may perform communication in these slots by using the RP. In addition, in a slot, the configuration information of the RP or the configuration information of the BWP may further indicate an OFDM symbol (referred to as a symbol for short below) that is in the slot and that can be used for SL transmission, for example, indicate a start symbol and duration (in a unit of a quantity of symbols). For example, if the start symbol indicated by the configuration information of the RP or the configuration information of the BWP is a symbol 2, and the duration is seven symbols, it means that in each slot that can be used for SL transmission, the symbol 2 (usually a 3$^{rd}$ symbol in the slot) to a symbol 8 (usually a 9$^{th}$ symbol in the slot) can be used for SL transmission. The following mainly uses an example in which all symbols in one slot available for SL transmission can be used for SL transmission. Configuration information of one RP may include, in frequency domain, a frequency spacing (in a unit of PRBs) between a start physical resource block (physical resource block, PRB) of the RP and the start frequency position of the BWP, include a quantity of subchannels (subchannels) included in the RP, and further include a quantity of PRBs included in each subchannel. The subchannel is usually a minimum unit of SL data transmission in frequency domain, that is, one or more subchannels are usually occupied for one SL data transmission. One PRB may usually include a plurality of subcarriers. Generally, one PRB may include 12 subcarriers. It can be found from the current configuration information of the RP that one RP may include a plurality of contiguous or non-contiguous slots in time domain and a segment of contiguous spectrum resources in frequency domain.

In 5.5G or 6G, because spectrum resources are limited, SL communication and SL sensing may operate in a same frequency band, for example, in 5 GHz and unlicensed frequency bands. According to existing resource pool configuration methods, different resource pools may be configured within one carrier or BWP for communication and sensing. Communication resource pools and sensing resource pools are orthogonal in time-frequency dimensions, making resources used by communication services and resources used by sensing services are orthogonal without interfering with each other. In addition, channels and signal structures in the sensing resource pools may be redesigned for sensing services, thereby providing greater design flexibility for SL sensing with almost no impact on SL communication. For example, as shown in FIG. 1, sensing resource pools and communication resource pools within one BWP or carrier may be time division multiplexed TDMed or FDMed.

When the sensing resource pools and the communication resource pools are frequency division multiplexed, sensing services generally require a large bandwidth to ensure the resolution of delay estimation and distance estimation. Therefore, it is necessary to ensure that the sensing resource pools need to be provided with a large bandwidth, which impacts a system capacity for SL communication. When the sensing resource pools and the communication resource pools are time division multiplexed, if the sensing resource pools requires a large unambiguous Doppler (velocity) estimation range, the sensing resource pool needs to have a smaller repetition period in the time domain, which also impacts the system capacity for SL communication.

In view of this, in embodiments of this application, a first resource pool having an interlaced structure in frequency domain is configured for positioning and/or sensing. The interlaced structure can ensure that the resource pool for positioning and/or sensing has a wide bandwidth, and can improve a resolution of distance estimation. In addition, the interlaced structure occupies only a part of frequency resources in frequency domain, and the remaining frequency resources may be occupied by a communication resource pool. Therefore, a capacity of the communication resource pool can also be ensured. Furthermore, the resource pool for positioning and/or sensing includes at least one first interlaced structure in frequency domain, and may be contiguous in time domain. Therefore, a large unambiguous Doppler estimation range can be ensured. It can be learned that the configured resource pool for positioning and/or sensing in embodiments of this application can ensure requirements of positioning services and/or sensing services, as well as requirements of communication services.

It can be learned that the first resource pool configured in embodiments of this application may be used for positioning and/or sensing. For example, because the positioning service also needs a wide bandwidth to ensure positioning precision, a positioning resource pool may also use a resource pool configuration form based on an interlaced structure in embodiments of this application. In addition, the first resource pool configured in embodiments of this application may be further used for another service. This is not specifically limited.

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system or a 5G SL system, or may be further applied to a next generation mobile communication system or another similar communication system, for example, a 6th generation (6th generation, 6G) mobile communication technology system or a 6G SL system. This is not specifically limited. In addition, the technical solutions provided in embodiments of this application may be applied to a D2D scenario, for example, an NR-D2D scenario, or may be applied to a V2X scenario, for example, an NR-V2X scenario. For example, the technical solutions provided in embodiments of this application may be applied to fields such as intelligent driving, assisted driving, or intelligent connected vehicles, or may be applied to scenarios such as a smart home and the like.

FIG. 3 shows a communication network architecture to which an embodiment of this application is applicable. FIG. 3 includes a UE 1, a UE 2, and a network device. The UE 1 is, for example, a UE for sensing and/or positioning, and the UE 2 is a communication UE. The network device includes, for example, an access network device and/or a core network device. The network device may separately configure resource pools for the UE 1 and the UE 2, for example, separately configure dedicated resource pools for the UE 1 and the UE 2. Alternatively, a resource pool used by the UE 1 and/or a resource pool used by the UE 2 may not be configured by the network device, for example, may be predefined in a protocol, may be preconfigured in the UE, or may be configured by a higher layer of the UE. In FIG. 3, for example, both the UE 1 and the UE 2 are located outside coverage of the network device. During actual application, the UE 1 and/or the UE 2 may alternatively be located within coverage of the network device. In other words, this embodiment of this application is also applicable to a scenario in which only the UE 1 and the UE 2 are included but the network device is not included. If both the UE 1 and the UE 2 are located within the coverage of the network device, the UE 1 and the UE 2 may be located within coverage of a same network device, or may be located within coverage of different network devices. The UE 1 and the UE 2 may communicate with each other, for example, communicate with each other over an SL, or may communicate with each other through the network device. Alternatively, the UE 1 and the UE 2 may not communicate with each other. A specific quantity of UEs is not limited in embodiments of this application. For example, in this embodiment of this application, only one UE may be included, or a plurality of UEs, for example, two UEs or three UEs may be included.

To better describe embodiments of this application, the following describes, with reference to the accompanying drawings, a method provided in embodiments of this application. Unless otherwise specified below, in the accompanying drawings corresponding to embodiments of this application, steps represented by dashed lines are all optional steps. The methods provided in embodiments of this application may be applied to the network architecture shown in FIG. 3. For example, a first UE in embodiments of this application may be the UE 1 in FIG. 3, and a second UE in embodiments of this application may be the UE 2 in FIG. 3.

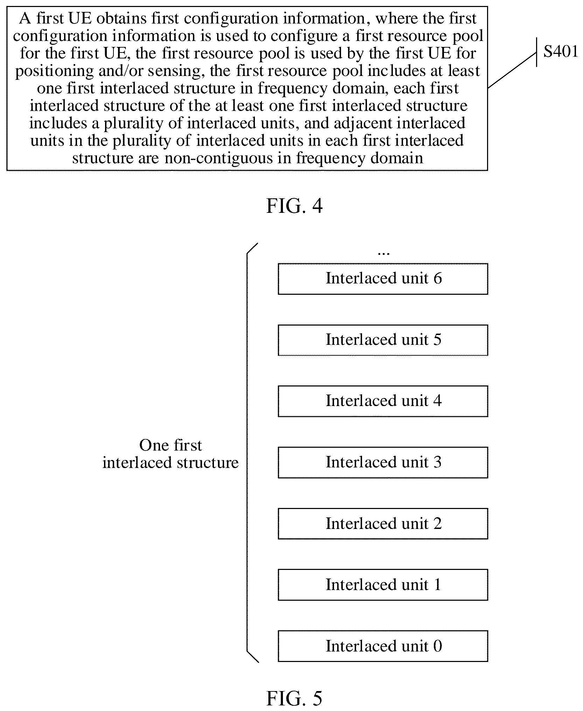

An embodiment of this application provides a resource pool configuration method. FIG. 4 is a flowchart of the method.

S401: A first UE obtains first configuration information. The first configuration information may be used to configure a first resource pool for the first UE, and the first resource pool may be used by the first UE for sensing and/or positioning. In other words, the first resource pool may be a resource pool that supports only a sensing service, may be a resource pool that supports only a positioning service, or may be a resource pool that supports both a sensing service and a positioning service. When the first resource pool is a resource pool that supports only a sensing service, the first UE may be understood as a sensing UE. When the first resource pool is a resource pool that supports only a positioning service, the first UE may be understood as a positioning UE. When the first resource pool is a resource pool that supports both a sensing service and a positioning service, the first UE may be a sensing UE, may be a positioning UE, or may be a UE that has both a sensing function and a service function. Alternatively, for sensing and positioning, differentiation may not be performed. Alternatively, positioning may be understood as a special sensing service. In embodiments of this application, descriptions are provided mainly by using an example in which the first resource pool is a sensing resource pool and the first UE is a sensing UE. In addition, another resource pool, for example, a communication resource pool, may be further configured for the first UE, and the first UE may also have a communication function. This is not limited in embodiments of this application.

Optionally, a network device may send the first configuration information to the first UE, so that the first UE obtains the first configuration information; or the first configuration information may be preconfigured for the first UE, for example, the first configuration information is pre-stored in a chip of the first UE. When the first configuration information is preconfigured for the first UE, a specific parameter in the first configuration information may be determined by a manufacturer, or may be predefined in a standard. This is not limited in embodiments of this application. Alternatively, a part of the first configuration information may be configured by a network device, and the other part of the first configuration information is preconfigured.

The first resource pool may include at least one first interlaced structure in frequency domain. In embodiments of this application, the interlaced structure may also be referred to as an interlace (interlace), interleaving, an interleaving structure, a comb (comb), a comb structure, or the like. A name is not limited. Each first interlaced structure of the at least one first interlaced structure may include a plurality of interlaced units, and adjacent interlaced units in the plurality of interlaced units may be non-contiguous in frequency domain. Optionally, each interlaced unit of the plurality of interlaced units may include one of the following: one PRB, one subcarrier (subcarrier), a plurality of contiguous PRBs, or a plurality of contiguous subcarriers. FIG. 5 is a diagram of one first interlaced structure. The first interlaced structure includes a plurality of interlaced units, where each interlaced unit may include one of the following: one PRB, one subcarrier, a plurality of contiguous PRBs, or a plurality of contiguous subcarriers.

In this embodiment of this application, a resource pool having an interlaced structure in frequency domain may be configured for the sensing UE. In this way, the sensing resource pool has a wider bandwidth (in other words, a frequency spacing between a start frequency position and an end frequency position of the interlaced structure is larger), and sensing precision of the sensing service can be improved. In addition, the interlaced structure also causes the sensing resource pool to occupy fewer total bandwidth resources in frequency domain, and therefore, more bandwidth resources can still be reserved for the communication resource pool, and impact on a system capacity for communication is small.

Optionally, the first configuration information may include one or more of the following: information about a start frequency position of one first interlaced structure; information about a size of a frequency resource included in one interlaced unit in one first interlaced structure; information about a frequency spacing between adjacent interlaced units included in one first interlaced structure; information about an end frequency position of one first interlaced structure; a quantity of interlaced units included in one first interlaced structure; a quantity of the at least one first interlaced structure; information about a start frequency position of the first resource pool; information about an end frequency position of the first resource pool; or at least one interlace index. The at least one interlace index may be used to determine the at least one first interlaced structure. In embodiments of this application, the first interlaced structure may be implemented in different manners, and content included in the first configuration information may also be different.

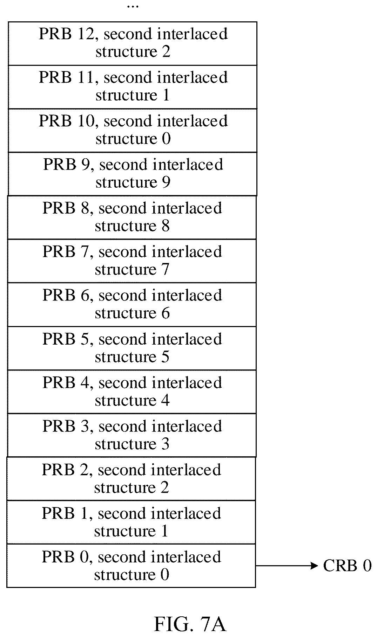

A concept of a "second interlaced structure" is first described before the first interlaced structure is specifically described. The second interlaced structure is, for example, an interlaced structure defined in a 5G system (or a future communication system), or may be another interlaced structure. The following uses an example in which the second interlaced structure is an interlaced structure defined in the 5G system. A PRB-level interlaced structure is defined in the 5G system, and the interlaced structure of this type is defined on a carrier or a channel. In this embodiment of this application, the interlaced structure of this type may be used as the second interlaced structure. One second interlaced structure may include several interlaced units, and one of the interlaced units is one PRB, namely, an interlaced PRB. A frequency spacing between interlaced PRBs in one second interlaced structure may be usually set to 5 or 10 PRBs. As shown in FIG. 7A, starting from a common RB (common RB, CRB) 0 on a carrier or a channel, PRBs may be numbered. It is assumed that the PRBs are numbered 0, 1, 2, .... For example, these PRBs are classified into 10 second interlaced structures, and interlace indexes 0 to 9 may be respectively associated with the second interlaced structures, in other words, the 10 second interlaced structures are second interlaced structures 0 to 9. For each second interlaced structure, a frequency spacing between two adjacent interlaced PRBs in the second interlaced structure is 10 PRBs (for example, 10 PRBs are included from a start frequency position of a PRB 0 to a start frequency location of a PRB 10). This may alternatively be understood as that the frequency spacing is nine PRBs (for example, there are nine PRBs between the PRB 0 and the PRB 10). Therefore, the second interlaced structure 0 may include a PRB 0, a PRB 10, a PRB 20, a PRB 30, and the like; the second interlaced structure 1 may include a PRB 1, a PRB 11, a PRB 21, a PRB 31, and the like; the second interlaced structure 2 may include a PRB 2, a PRB 12, a PRB 22, a PRB 32, and the like; and so on. Details are not described herein again. A frequency spacing between adjacent interlaced PRBs in one second interlaced structure may alternatively be set to another value, for example, five PRBs (or understood as four PRBs). In embodiments of this application, the first interlaced structure may be implemented by using the second interlaced structure, or the first interlaced structure is a new interlaced structure newly defined in embodiments of this application without considering the second interlaced structure, which are separately described below.

In an optional implementation of the first interlaced structure, the first interlaced structure is a new interlaced structure defined in embodiments of this application (or may be understood as an interlaced structure more flexible or more general than the second interlaced structure), or a structure of the first interlaced structure is a new structure defined in embodiments of this application. Optionally, the first configuration information includes one or more of the following: information about a start frequency position of one first interlaced structure; information about an end frequency position of one first interlaced structure; information about a size of a frequency resource included in one interlaced unit in one first interlaced structure; information about a frequency spacing between adjacent interlaced units included in one first interlaced structure; a quantity of interlaced units included in one first interlaced structure; a quantity of the at least one first interlaced structure; information about a start frequency position of the first resource pool; or information about an end frequency position of the first resource pool.

The start frequency position of the first interlaced structure may be a start frequency position of an interlaced unit with a lowest frequency position in the first interlaced structure. For example, a start frequency position of an interlaced unit 0 in FIG. 5 may be the start frequency position of the first interlaced structure. Optionally, the information about the start frequency position of the first interlaced structure is, for example, a frequency spacing between the start frequency position of the first interlaced structure and a start frequency position of a first BWP, where the first BWP is a BWP in which the first resource pool is located. Alternatively, the information about the start frequency position of the first interlaced structure may be a frequency spacing between the start frequency position of the first interlaced structure and a start frequency position or center frequency position of a first carrier (or a first channel), where the first carrier (or the first channel) is a carrier (or a channel) in which the first resource pool (or a first BWP) is located. The start frequency position may be a start PRB, a start subcarrier, or an absolute frequency (in a unit of hertz). For example, a start frequency position of one first interlaced structure may be a start PRB, a start subcarrier, or a frequency of the first interlaced structure. A unit of the frequency spacing may be a quantity of PRBs, that is, the frequency spacing includes an integer quantity of PRBs. Alternatively, a unit of the frequency spacing may be a quantity of subcarriers, that is, the frequency spacing includes an integer quantity of subcarriers. Alternatively, a unit of the frequency spacing may be hertz.

Optionally, the frequency spacing may be 0. In other words, the start frequency position of the first interlaced structure may overlap the start frequency position of the first BWP, or overlap the start frequency position or center frequency position of the first carrier (or the first channel).

When the first resource pool includes only one first interlaced structure, a start frequency position of the first interlaced structure may alternatively be understood as the start frequency position of the first resource pool.

When the first resource pool includes a plurality of first interlaced structures, start frequency positions may be separately configured for different first interlaced structures. For example, for each first interlaced structure, a corresponding start frequency position may be configured in the foregoing manner.

For another example, for a first interlaced structure, for example, denoted as a first interlaced structure a, a corresponding start frequency position may be configured in the foregoing manner, and then a frequency spacing between a start frequency position of another first interlaced structure and the start frequency position of the first interlaced structure a is configured. If the start frequency position of the first interlaced structure a has a lowest frequency in start frequency positions of all first interlaced structures in the first resource pool, the start frequency position of the first interlaced structure a may alternatively be understood as the start frequency position of the first resource pool.

For still another example, the plurality of first interlaced structures included in the first resource pool are a first interlaced structure a, a first interlaced structure b, a first interlaced structure c, .... For the first interlaced structure a, a corresponding start frequency position may be configured in the foregoing manner. For the first interlaced structure b, a frequency spacing between a start frequency position of the first interlaced structure b and the start frequency position of the first interlaced structure a may be configured. For the first interlaced structure c, a frequency spacing between a start frequency position of the first interlaced structure c and the start frequency position of the first interlaced structure b may be configured. The rest can be deduced by analogy. Optionally, a frequency spacing between start frequency positions of adjacent first interlaced structures may be the same. For example, the frequency spacing between the start frequency position of the first interlaced structure a and the start frequency position of the first interlaced structure b may be equal to the frequency spacing between the start frequency position of the first interlaced structure b and the start frequency position of the first interlaced structure c. In this case, only one frequency spacing may be configured (where a frequency spacing between the start frequency position of the first interlaced structure a and a BWP or a channel may not be included). Similarly, if the start frequency position of the first interlaced structure a has a lowest frequency in start frequency positions of all first interlaced structures in the first resource pool, the start frequency position of the first interlaced structure a may alternatively be understood as the start frequency position of the first resource pool.

The size of the frequency resource included in the interlaced unit in the first interlaced structure may be a quantity of PRBs or subcarriers included in one interlaced unit. In one first interlaced structure, sizes of frequency resources included in different interlaced units may be the same or different. If the sizes are the same, for the first interlaced structure, the first configuration information (or a default value) needs to include only information about a size of a frequency resource included in any interlaced unit in the first interlaced structure. If the sizes are different, for the first interlaced structure, the first configuration information (or a default value) may include information about a size of a frequency resource included in each interlaced unit in the first interlaced structure. In addition, sizes of frequency resources of interlaced units included in different first interlaced structures may be the same or different. If the sizes are the same, for at least one first interlaced structure, the first configuration information (or a default value) needs to include only information about a size of a frequency resource of an interlaced unit in any one of the at least one first interlaced structure. If the sizes are different, for at least one first interlaced structure, the first configuration information (or a default value) may include information about a size of a frequency resource of an interlaced unit in each of the at least one first interlaced structure. Alternatively, sizes of frequency resources of interlaced units included in a part of at least one first interlaced structure may be the same. For this part of first interlaced structure, the first configuration information (or a default value) needs to include only information about a size of a frequency resource of an interlaced unit in any one of the part of first interlaced structure. For other first interlaced structures, the first configuration information (or a default value) may include information about a size of a frequency resource of an interlaced unit in each of the other first interlaced structures. The first interlaced structure a and the first interlaced structure b are used as an example. For example, sizes of frequency resources of interlaced units included in the two interlaced structures are the same, and possible cases are as follows: Case 1: Sizes of frequency resources of all interlaced units included in the first interlaced structure a are the same, and are all v PRBs, and sizes of frequency resources of all interlaced units included in the first interlaced structure b are the same, and are all v PRBs. In this case, for the first interlaced structure a and the first interlaced structure b, the first configuration information (or a default value) only needs to include v. Case 2: Sizes of frequency resources of different interlaced units included in the first interlaced structure a are different, for example, v1, v2, ..., and sizes of frequency resources of different interlaced units included in the first interlaced structure b are different, for example, v1, v2, .... In Case 2, it is also considered that the sizes of the frequency resources of the interlaced units included in the first interlaced structure a are the same as the sizes of the frequency resources of the interlaced units included in the first interlaced structure b. In this case, the first configuration information (or a default value) needs to include only v1, v2, ....

A frequency spacing between adjacent interlaced units included in one first interlaced structure may include an integer quantity of PRBs or subcarriers. The frequency spacing may be a frequency spacing between start frequency positions of the adjacent interlaced units, a frequency spacing between end frequency positions of the adjacent interlaced units, a frequency spacing between an end frequency position of the former interlaced unit and a start frequency position of the latter interlaced unit in the adjacent interlaced units, or a frequency spacing between a start frequency position of the former interlaced unit and an end frequency position of the latter interlaced unit in the adjacent interlaced units. In one first interlaced structure, any two adjacent interlaced units may have an equal frequency spacing, or different adjacent interlaced units may have unequal frequency spacings. For example, one first interlaced structure includes an interlaced unit 0 to an interlaced unit 9, where a frequency spacing between the interlaced unit 0 and the interlaced unit 1 is a spacing 1, and a frequency spacing between the interlaced unit 1 and the interlaced unit 2 is a spacing 2. The spacing 1 and the spacing 2 may be equal or not equal to each other. If any two adjacent interlaced units in one first interlaced structure have an equal frequency spacing, the first configuration information (or a default value) needs to include only information about a frequency spacing between any pair of adjacent interlaced units in the first interlaced structure. Alternatively, if any two adjacent interlaced units in one first interlaced structure have unequal frequency spacings, the first configuration information (or a default value) may include information about a frequency spacing between each pair of adjacent interlaced units in the first interlaced structure. In addition, any adjacent interlaced units in adjacent interlaced units included in different first interlaced structures may have an equal frequency spacing. Alternatively, adjacent interlaced units in different first interlaced structures may have unequal frequency spacings. If any adjacent interlaced units in the adjacent interlaced units included in the different first interlaced structures have an equal frequency spacing, the first configuration information (or a default value) needs to include only information about a frequency spacing between adjacent interlaced units in any one of the different first interlaced structures. Alternatively, if any adjacent interlaced units in the adjacent interlaced units included in the different first interlaced structures have unequal frequency spacings, the first configuration information (or a default value) may include information about a frequency spacing between adjacent interlaced units in each of the different first interlaced structures. Alternatively, if adjacent interlaced units included in a part of the at least one first interlaced structure may have an equal frequency spacing, for this part of first interlaced structure, the first configuration information (or a default value) needs to include only information about a frequency spacing between adjacent interlaced units in any one of this part of first interlaced structure, and for other first interlaced structures, the first configuration information (or a default value) may include information about a frequency spacing between adjacent interlaced units in each of the other first interlaced structures. The first interlaced structure a and the first interlaced structure b are used as an example. For example, adjacent interlaced units included in the two interlaced structures have a same frequency spacing, and possible cases are as follows: Case 1: Adjacent interlaced units included in the first interlaced structure a have a same frequency spacing, namely, w PRBs, and adjacent interlaced units included in the first interlaced structure b have a same frequency spacing, namely, w PRBs. In this case, for the first interlaced structure a and the first interlaced structure b, the first configuration information (or a default value) only needs to include w. Case 2: Different adjacent interlaced units included in the first interlaced structure a have different frequency spacings, for example, w1, w2, ..., and different adjacent interlaced units included in the first interlaced structure b have different frequency spacings, for example, w1, w2, .... In Case 2, it is also considered that a frequency spacing between adjacent interlaced units included in the first interlaced structure a is the same as a frequency spacing between adjacent interlaced units included in the first interlaced structure b. In this case, the first configuration information (or a default value) needs to include only w1, w2, ....

The end frequency position of the first interlaced structure may be, for example, an end frequency position of an interlaced unit with a highest frequency position in the first interlaced structure. The information about the end frequency position of the first interlaced structure is a frequency spacing between the end frequency position of the first interlaced structure and an end frequency position of the first BWP, a frequency spacing between the end frequency position of the first interlaced structure and the start frequency position of the first BWP, a frequency spacing between the end frequency position of the first interlaced structure and the start frequency position of the first interlaced structure, or a frequency spacing between the end frequency position of the first interlaced structure and the end frequency position or center frequency position of the first carrier (or the first channel). The end frequency position may be an end PRB, an end subcarrier, or an absolute frequency (in a unit of hertz). For example, an end frequency position of one first interlaced structure may be an end PRB, an end subcarrier, or a frequency of the first interlaced structure.

Optionally, when an end frequency position of one interlaced structure is the frequency spacing between the end frequency position of the first interlaced structure and the end frequency position of the first BWP, or the frequency spacing between the end frequency position of the first interlaced structure and the end frequency position or center frequency position of the first carrier (or the first channel), the frequency spacing may be 0. In other words, the end frequency position of the first interlaced structure may overlap the end frequency position of the first BWP, or overlap the end frequency position or center frequency position of the first carrier (or the first channel).

When the first resource pool includes only one first interlaced structure, an end frequency position of the first interlaced structure may alternatively be understood as the end frequency position of the first resource pool.

When the first resource pool includes a plurality of first interlaced structures, end frequency positions may be separately configured for different first interlaced structures. For example, for each first interlaced structure, a corresponding end frequency position may be configured in the foregoing manner.

For another example, for a first interlaced structure, for example, denoted as a first interlaced structure a, a corresponding end frequency position may be configured in the foregoing manner, and then a frequency spacing between an end frequency position of another first interlaced structure and the end frequency position of the first interlaced structure a is configured. If an end frequency position of a first interlaced structure has a highest frequency in end frequency positions of all first interlaced structures in the first resource pool, the end frequency position of the first interlaced structure may alternatively be understood as the end frequency position of the first resource pool.

For still another example, the plurality of first interlaced structures included in the first resource pool are a first interlaced structure a, a first interlaced structure b, a first interlaced structure c, .... For the first interlaced structure a, a corresponding end frequency position may be configured in the foregoing manner. For the first interlaced structure b, a frequency spacing between an end frequency position of the first interlaced structure b and the end frequency position of the first interlaced structure a may be configured. For the first interlaced structure c, a frequency spacing between an end frequency position of the first interlaced structure c and the end frequency position of the first interlaced structure b may be configured. The rest can be deduced by analogy. Optionally, a frequency spacing between end frequency positions of adjacent first interlaced structures may be the same. For example, the frequency spacing between the end frequency position of the first interlaced structure a and the end frequency position of the first interlaced structure b may be equal to the frequency spacing between the end frequency position of the first interlaced structure b and the end frequency position of the first interlaced structure c. In this case, only one frequency spacing may be configured (where a frequency spacing between the end frequency position of the first interlaced structure b and a BWP or a channel is not included). Similarly, if an end frequency position of a first interlaced structure has a highest frequency in end frequency positions of all first interlaced structures in the first resource pool, the end frequency position of the first interlaced structure may alternatively be understood as the end frequency position of the first resource pool.

Alternatively, the first configuration information (or a default value) may not include an end frequency position of one first interlaced structure. The end frequency position of the first interlaced structure may be determined in an indirect indication manner. For example, the first configuration information includes the quantity of interlaced units included in the first interlaced structure, and the quantity may be used to determine a size of the first interlaced structure. In addition, an end frequency position of the first interlaced structure may be determined based on the quantity, a start frequency position of the first interlaced structure, a size of a frequency resource included in an interlaced unit in the first interlaced structure, and a frequency spacing between interlaced units. Quantities of interlaced units included in different first interlaced structures may be equal or not equal to each other. If the quantities of the interlaced units included in the different first interlaced structures are equal to each other, the first configuration information (or a default value) needs to include only a quantity of interlaced units in any first interlaced structure. Alternatively, if the quantities of the interlaced units included in the different first interlaced structures are not equal to each other, the first configuration information (or a default value) may include a quantity of interlaced units in each first interlaced structure.

For another example, the first configuration information includes the end frequency position of the first resource pool, and the end frequency position of the first resource pool may also be used to determine a frequency resource specifically included in one first interlaced structure (including an end frequency position of the first interlaced structure). An end frequency position of each first interlaced structure in the first resource pool does not exceed (for example, is lower than or equal to in frequency) the end frequency position of the first resource pool. For example, assuming that it may be determined, based on the foregoing descriptions, that a start frequency position of one first interlaced structure is a PRB A, a frequency resource included in one interlaced unit in the first interlaced structure is B PRBs, a frequency spacing between adjacent interlaced units in the first interlaced structure is C PRBs, and the end frequency position of the first resource pool is a PRB (A+D), frequency resources included in the first interlaced structure are: PRBs A to A+B-1, PRBs A+C to A+C+B-1, PRBs A+2C to A+2C+B-1, ..., PRBs $A + \lfloor D/C \rfloor \times C$ to $A + \min(\lfloor D/C \rfloor \times C + B, D)$.

Alternatively, frequency resources included in the first interlaced structure are: PRBs A to A+B-1, PRBs A+C to A+C+B-1, PRBs A+2C to A+2C+B-1, ..., PRBs $A + \lfloor (D-1)/C \rfloor \times C$ to $A + \min(\lfloor (D-1)/C \rfloor \times C + B, D-1)$. $\lfloor X \rfloor$ indicates rounding down X. That is, a largest PRB included in the first resource pool may be a PRB (A+D), or may be a PRB (A+D-1). Optionally, when the end frequency position of the first resource pool is configured, the end frequency position may be directly indicated, a relative position of the end frequency position relative to the start frequency position of the first resource pool may be indicated, or a relative position of the end frequency position relative to a carrier (or a channel) or BWP in which the first resource pool is located is indicated, for example, a spacing between the end frequency position and a start frequency position or an end frequency position of the carrier or BWP in which the first resource pool is located is indicated.

Optionally, regardless of whether the first configuration information (or a default value) directly includes an end frequency position of one first interlaced structure, or an end frequency position of one first interlaced structure is determined in an indirect indication manner, a last interlaced unit in one first interlaced structure may be an interlaced unit that includes fewer frequency resources than other interlaced units, for example, $D - \left\lceil \dfrac{D}{C} \right\rceil \times C < B$ . In this case, the last interlaced unit may be reserved, or the last interlaced unit may be removed, to ensure that frequency resources of the first interlaced structure are more regular.

The quantity of the at least one first interlaced structure is a quantity of first interlaced structures included in the first resource pool.

Optionally, the foregoing information may be included in the first configuration information, or the first UE may obtain a part of the foregoing information in another manner. For example, a part or all of the start frequency position of the first resource pool, the start frequency position of the first interlaced structure, the end frequency position of the first interlaced structure, the end frequency position of the first resource pool, the quantity of the at least one first interlaced structure, or the quantity of interlaced units included in the first interlaced structure are default values. The default value is, for example, predefined in a protocol, or preconfigured in the first UE. In this case, the first configuration information may not include the default value. For example, the first configuration information may include information that is not the default value in the foregoing items, and include the information about the size of the frequency resource included in the interlaced unit in the first interlaced structure, and the information about the frequency spacing between the adjacent interlaced units included in the first interlaced structure. Alternatively, a part or all of four items, namely, the start frequency position of the first resource pool, the end frequency position of the first resource pool, the quantity of the at least one first interlaced structure, or the quantity of interlaced units included in the first interlaced structure are default values. In addition, the size of the frequency resource included in the interlaced unit or the frequency spacing between the adjacent interlaced units included in the first interlaced structure is also a default value. In this case, the first configuration information may not include the default value. For example, the first configuration information may include information that is not the default value in the four items, and include one, of the size of the frequency resource included in the interlaced unit and the frequency spacing between the adjacent interlaced units included in the first interlaced structure, that is not the default value. Optionally, the default value of the start frequency position of the first resource pool is, for example, the start frequency position of the BWP in which the first resource pool is located; and the default value of the end frequency position of the first resource pool is, for example, the end frequency position of the BWP in which the first resource pool is located.

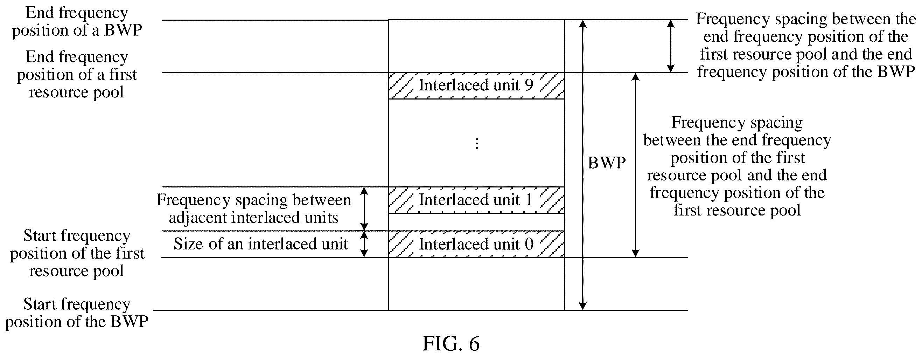

FIG. 6 is a diagram of a first resource pool. In FIG. 6, an example in which the first resource pool includes one first interlaced structure, and the first interlaced structure includes 10 interlaced units is used to show parameters such as a start frequency position and an end frequency position of the first resource pool, a frequency spacing between adjacent interlaced units, and a size of a frequency resource included in an interlaced unit (represented as a size of the interlaced unit in FIG. 6). Three shadow areas shown by "/" in FIG. 6 all represent frequency resources included in the first resource pool, and each shadow area represents one interlaced unit in one first interlaced structure included in the first resource pool. In FIG. 6, the first resource pool is located in a BWP. It can be learned that a first UE can determine the first resource pool based on first configuration information, so that the first resource pool can be used by the first UE for a service such as sensing and/or positioning.

In the foregoing solutions, the first interlaced structure is a newly defined interlaced structure in embodiments of this application. Alternatively, in another optional implementation of the first interlaced structure, the first interlaced structure may be determined based on the second interlaced structure described above. For example, when a size of an interlaced unit included in the first interlaced structure is one PRB, a frequency spacing between adjacent interlaced units is 5 or 10 PRBs, and one PRB in the first interlaced structure is aligned with one PRB in the second interlaced structure, it may be considered that a frequency resource of the second interlaced structure includes a frequency resource of the first interlaced structure, or it may be understood as that one first interlaced structure may include a part or all of interlaced units in one second interlaced structure.

In this case, the first interlaced structure may be indicated by using an interlace index of the second interlaced structure. Because a structure of the second interlaced structure is known, the first configuration information may not need to include structure information of the first interlaced structure (for example, may not need to indicate a size of a frequency resource included in an interlaced unit or a frequency spacing between adjacent interlaced units). Optionally, the first configuration information may include one or more of the following: information about a start frequency position of one first interlaced structure, at least one interlace index, a quantity of interlaced units included in one first interlaced structure, or information about an end frequency position of a 1st first interlaced structure. A part of the foregoing items of information may alternatively be default values, and the first configuration information may include only remaining information. For details, refer to the foregoing descriptions.

The at least one interlace index may be an interlace index of at least one second interlaced structure, and is used to determine at least one first interlaced structure. For example, each interlace index of the at least one interlace index included in the first configuration information is associated with one second interlaced structure, and a frequency resource of the at least one second interlaced structure associated with the at least one interlace index may include a frequency resource of the at least one first interlaced structure in the first resource pool. A first channel may include a plurality of second interlaced structures (for example, PRB-level interlaced structures defined in the 5G system), and each second interlaced structure of the plurality of second interlaced structures may be associated with one interlace index. Therefore, the at least one interlace index included in the first configuration information may be used to determine the at least one second interlaced structure associated with the at least one interlace index. A frequency resource of each second interlaced structure of the at least one associated second interlaced structure includes a frequency resource of one first interlaced structure in the first resource pool. For example, it may also be understood as that the at least one second interlaced structure associated with the at least one interlace index may be in one-to-one correspondence with the at least one first interlaced structure in the first resource pool. Alternatively, it is conversely understood as that, one first interlaced structure may include all or a part of interlaced units in a second interlaced structure corresponding to the first interlaced structure. On this basis, the first interlaced structure may be determined based on a start frequency position and an end frequency position of the first interlaced structure. For example, in the frequency resource of the at least one second interlaced structure associated with the at least one interlace index, a frequency resource between the start frequency position and the end frequency position of the first resource pool is the frequency resource of the at least one first interlaced structure (for example, is all frequency resources of the at least one first interlaced structure). For example, an interlace index of one second interlaced structure defined in the 5G system is 0, and the second interlaced structure includes a PRB 0, a PRB 10, a PRB 20, a PRB 30, a PRB 40, a PRB 50, a PRB 60, a PRB 70, .... One first interlaced structure included in the first resource pool corresponds to the second interlaced structure, and a start frequency position of the first interlaced structure is a PRB 10, and an end frequency position of the first interlaced structure is a PRB 50. In this case, the first interlaced structure includes the PRB 10, the PRB 20, the PRB 30, the PRB 40, and the PRB 50 in the second interlaced structure, and the PRB 60, the PRB 70, ..., and the like in the second interlaced structure are not included in the first interlaced structure.

Optionally, the foregoing process may alternatively be understood as that the first resource pool directly includes all or a part of interlaced units in the at least one second interlaced structure, and a specific concept of the first interlaced structure may not need to be introduced.

An optional configuration manner of the at least one interlace index is as follows: For example, the first configuration information may include an index list, and the index list may include an interlace index of the at least one second interlaced structure. In this case, the first resource pool includes a first interlaced structure corresponding to the second interlaced structure indicated by the interlace index in the index list. For another example, the first configuration information may include a start interlace index and a quantity of first interlaced structures included in the first resource pool (or equivalently, include a quantity of associated second interlaced structures), indicating that first interlaced structures starting from a first interlaced structure corresponding to a second interlaced structure of the start interlace index, to a last first interlaced structure determined based on the quantity of first interlaced structures are included in the first resource pool. For example, if the start interlace index is 0, and the quantity of first interlaced structures included in the first resource pool is 2, second interlaced structures corresponding to the first interlaced structures included in the first resource pool are a second interlaced structure 0 and a second interlaced structure 1. For another example, if the start interlace index is 9, and the quantity of first interlaced structures included in the first resource pool is 2, second interlaced structures corresponding to the first interlaced structures included in the first resource pool are a second interlaced structure 9 and a second interlaced structure 0.

For descriptions of the start frequency position and the end frequency position of the first interlaced structure, refer to the foregoing descriptions. The end frequency position of the first interlaced structure may alternatively be determined in a direct indication manner or an indirect indication manner (that is, the first configuration information includes the end frequency position of the first resource pool, a quantity of interlaced units included in each first interlaced structure, or the like). Alternatively, the start frequency position and the end frequency position of the first interlaced structure may be indicated by indicating relative positions of the start frequency position and the end frequency position of the first interlaced structure in the second interlaced structure. For example, "0" represents a 1st interlaced PRB (for example, a PRB X starting from a CRB 0) in a corresponding second interlaced structure, and "1" represents a 2nd interlaced PRB (for example, a PRB (X+5) or a PRB+10 starting from the CRB 0) in the corresponding second interlaced structure. The rest can be deduced by analogy. The end frequency position of the first interlaced structure may alternatively be determined based on the start frequency position of the first interlaced structure and the quantity of interlaced units included in the first interlaced structure. For example, if a start frequency position of one first interlaced structure is a 1st interlaced PRB (for example, the PRB X starting from the CRB 0) in a corresponding second interlaced structure, a quantity of interlaced units included in the first interlaced structure is 5, and a frequency spacing between adjacent interlaced units in the second interlaced structure is five PRBs, an end frequency position of the first interlaced structure may be a PRB $(X+5\times4)$.

Alternatively, optionally, the start frequency position of the first interlaced structure may be determined based on the start frequency position and the end frequency position of the first resource pool. For example, a start interlaced unit of the first interlaced structure is a 1st interlaced unit that is in a second interlaced structure corresponding to the first interlaced structure and whose frequency is greater than or equal to the start frequency position of the first resource pool, and a last interlaced unit of the first interlaced structure is a last interlaced unit that is in the second interlaced structure corresponding to the first interlaced structure and whose frequency is less than or equal to the end frequency position of the first resource pool. For example, a first interlaced structure a corresponds to a second interlaced structure a. In the second interlaced structure a, if a 1st first interlaced unit whose frequency is greater than or equal to the start frequency position of the first resource pool is a PRB 10, and a last interlaced unit whose frequency is less than or equal to the end frequency position of the first resource pool is a PRB 50, it may be determined that a start frequency position of the first interlaced structure a is the PRB 10, and an end frequency position of the first interlaced structure a is the PRB 50.

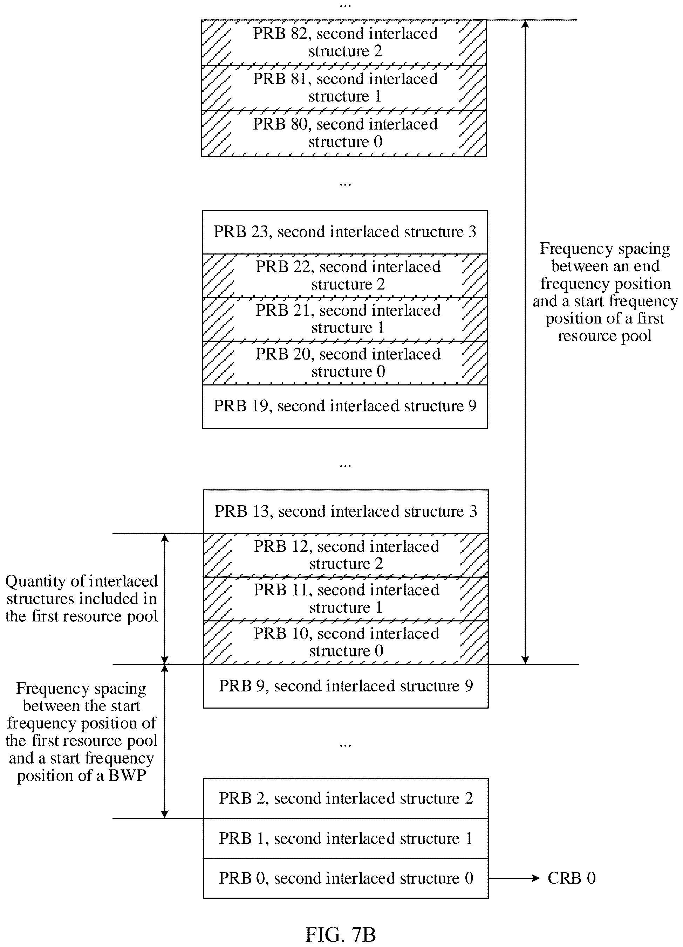

FIG. 7B is a diagram of a first interlaced structure included in a first resource pool. For example, in FIG. 7B, a frequency resource of a second interlaced structure 0 includes a frequency resource of one first interlaced structure (in this case, an interlace index of the first interlaced structure is also 0), a frequency resource of a second interlaced structure 1 includes a frequency resource of one first interlaced structure (in this case, an interlace index of the first interlaced structure is also 1), and a second interlaced structure 2 includes a frequency resource of one first interlaced structure (in this case, an interlace index of the first interlaced structure is also 2). The three first interlaced structures (whose interlace indexes are 0, 1, and 2) are all included in the first resource pool, and a frequency resource of another second interlaced structure does not include a frequency resource in the first resource pool, in other words, the frequency resource of the another second interlaced structure does not include a frequency resource of a first interlaced structure. Shadow areas shown by "/" in FIG. 7B all represent frequency resources included in the first resource pool, and each shadow area represents one interlaced unit in a first interlaced structure included in the first resource pool. It can be learned that a first UE can determine the first resource pool based on first configuration information, so that the first resource pool can be used by the first UE for a service such as sensing and/or positioning.

In embodiments of this application, a first resource pool having an interlaced structure in frequency domain is configured for sensing/positioning. The interlaced structure can ensure that the resource pool for sensing has a wide bandwidth, and can improve a resolution of distance estimation. In addition, the interlaced structure occupies only a part of frequency resources in frequency domain, and the remaining frequency resources may be occupied by a communication resource pool. Therefore, a capacity of the communication resource pool can also be ensured. Furthermore, the resource pool for sensing includes at least one first interlaced structure in frequency domain, and may be contiguous in time domain. Therefore, a large unambiguous Doppler estimation range can be ensured. It can be learned that the resource pool that is for sensing and that is configured in embodiments of this application can ensure a requirement of a sensing service, and can ensure a requirement of a communication service. In addition, in embodiments of this application, a new interlaced structure may be defined as the first interlaced structure, or the first interlaced structure may be defined by using a defined interlaced structure. An implementation is flexible.

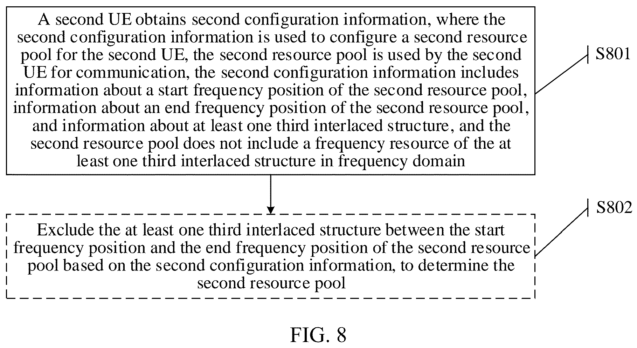

Further, an embodiment of this application provides another resource pool configuration method. FIG. 8 is a flowchart of the method.

S801: A second UE obtains second configuration information. The second configuration information may be used to configure a second resource pool for the second UE, and the second resource pool may be used by the second UE for communication.

For example, the second UE is a communication UE. Optionally, the second UE and a first UE may be a same UE, and the UE is not only a sensing UE (or both a sensing UE and a positioning UE), but also a communication UE; or the second UE and a first UE may be different UEs.

Optionally, a network device may send the second configuration information to the second UE, so that the second UE obtains the second configuration information; or the second configuration information may be preconfigured for the second UE, for example, the second configuration information is pre-stored in a chip of the second UE. When the second configuration information is preconfigured for the second UE, a specific parameter in the second configuration information may be determined by a manufacturer, or may be predefined in a standard. This is not limited in embodiments of this application. Alternatively, a part of the second configuration information may be configured by a network device, and the other part of the second configuration information is preconfigured.

The second resource pool is different from the first resource pool described in the embodiment shown in FIG. 4. Optionally, the two resource pools may be located in a same BWP, for example, a first BWP. UEs of different types should use respective resource pools, to avoid resource collision. In this case, the communication UE should not use a resource in the first resource pool, and the second configuration information may be used by the communication UE to exclude a resource belonging to the first resource pool to determine the second resource pool. For example, the second configuration information may include information about a start frequency position of the second resource pool, information about an end frequency position of the second resource pool, and first configuration information. The first configuration information may be used to configure the first resource pool. In this case, the second UE may determine a frequency domain range based on the start frequency position and the end frequency position of the second resource pool, and exclude a resource belonging to the first resource pool from the frequency domain range, to obtain the second resource pool. For another example, the second configuration information may further include configuration information of a plurality of sensing/positioning resource pools. To be specific, the second configuration information may further include third configuration information. The third configuration information may be used to configure a third resource pool. The third resource pool may be a resource pool for sensing/positioning, namely, a resource pool with an interlaced structure. For specific information included in the third configuration information, refer to the descriptions of the first configuration information in the embodiment shown in FIG. 4.

Alternatively, the second configuration information may include information about a start frequency position of the second resource pool, information about an end frequency position of the second resource pool, and information about at least one third interlaced structure. The at least one third interlaced structure is an interlace that should be excluded from the second resource pool in frequency domain, or the second resource pool does not include, in frequency domain, a frequency resource occupied by the at least one third interlaced structure. For example, all interlaced units included in the at least one third interlaced structure belong to the first resource pool. The second UE may determine a frequency domain range based on the start frequency position and the end frequency position of the second resource pool, and exclude the at least one third interlaced structure from the frequency domain range, to obtain the second resource pool. A quantity of the at least one third interlaced structure may be less than or equal to the quantity of the at least one first interlaced structure in the embodiment shown in FIG. 4.

The start frequency position of the second resource pool includes, for example, a frequency spacing between the start frequency position of the second resource pool and a start frequency position of the first BWP, or includes a frequency spacing between the start frequency position of the second resource pool and a start frequency position or center frequency position of a first channel (or a first carrier). The first BWP is a BWP in which the second resource pool is located.

The end frequency position of the second resource pool includes, for example, a frequency spacing between the end frequency position of the second resource pool and an end frequency position of the first BWP, includes a frequency spacing between the end frequency position of the second resource pool and the start frequency position of the second resource pool, includes a frequency spacing between the end frequency position of the second resource pool and the start frequency position of the first BWP, or includes a frequency spacing between the end frequency position of the second resource pool and an end frequency position or the center frequency position of the first channel (or the first carrier). Alternatively, the end frequency position of the second resource pool may be determined in an indirect indication manner. For example, the second configuration information includes a frequency spacing between the start frequency position and the end frequency position of the second resource pool. The frequency spacing is, for example, several PRBs, several subchannels (in this case, the second configuration information may further indicate a quantity of PRBs or subcarriers included in one subchannel in the second resource pool), or several subcarriers. For descriptions of concepts such as the start frequency position, the end frequency position, and the frequency spacing, refer to the embodiment shown in FIG. 4.

Each third interlaced structure of the at least one third interlaced structure may include a plurality of interlaced units, and adjacent interlaced units in the plurality of interlaced units are non-contiguous in frequency domain. Optionally, each interlaced unit of the plurality of interlaced units may include one of the following: one PRB, one subcarrier, a plurality of contiguous PRBs, or a plurality of contiguous subcarriers. The third interlaced structure and the first interlaced structure may be of a same structure. For example, a size of an interlaced unit included in the third interlaced structure is the same as a size of an interlaced unit included in the first interlaced structure, and a frequency spacing between adjacent interlaced units included in the third interlaced structure is the same as a frequency spacing between adjacent interlaced units included in the first interlaced structure. In addition, a quantity of interlaced units included in one third interlaced structure may be the same as or different from a quantity of interlaced units included in one first interlaced structure. For example, one third interlaced structure may include a part of interlaced units in one first interlaced structure (for example, only a part of interlaced units in the first interlaced structure is between the start frequency position and the end frequency position of the second resource pool). Alternatively, a frequency resource of one third interlaced structure may include frequency resources of two or more first interlaced structures (for example, the two or more first interlaced structures are located between the start frequency position and the end frequency position of the second resource pool, and the two or more first interlaced structures may be considered as one third interlaced structure).

For example, a frequency domain range 1 is between a start frequency position and an end frequency position of the first resource pool, and a frequency domain range 2 is between the start frequency position and the end frequency position of the second resource pool. The frequency domain range 1 and the frequency domain range 2 may completely overlap, or may partially overlap. If the frequency domain range 1 and the frequency domain range 2 have equal sizes and completely overlap, the at least one third interlaced structure is the at least one first interlaced structure included in the first resource pool in the embodiment shown in FIG. 4. Alternatively, if a size of the frequency domain range 1 is less than that of the frequency domain range 2, and the frequency domain range 1 is completely included in the frequency domain range 2, the at least one third interlaced structure may be the at least one first interlaced structure in the embodiment shown in FIG. 4, or two or more first interlaced structures in the at least one first interlaced structure may be one third interlaced structure. Alternatively, if a size of the frequency domain range 2 is less than that of the frequency domain range 1, and the frequency domain range 2 is completely included in the frequency domain range 1, the at least one third interlaced structure is in one-to-one correspondence with the at least one first interlaced structure in the embodiment shown in FIG. 4. For example, a frequency resource of a corresponding first interlaced structure includes a frequency resource of a third interlaced structure, and a quantity of interlaced units included in the third interlaced structure is less than a quantity of interlaced units included in the first interlaced structure. Alternatively, if the frequency domain range 2 and the frequency domain range 1 partially overlap, the at least one third interlaced structure may include a part of interlaced units in the at least one first interlaced structure in the embodiment shown in FIG. 4, and may include a part or all of interlaced units of another interlaced structure in another resource pool.

Optionally, the second configuration information may include one or more of the following (or the information about the at least one third interlaced structure may include one or more of the following): information about a start frequency position of one third interlaced structure; information about an end frequency position of one third interlaced structure; information about a size of a frequency resource included in one interlaced unit in one third interlaced structure; information about a frequency spacing between adjacent interlaced units in one third interlaced structure; a quantity of interlaced units included in one third interlaced structure; a quantity of the at least one third interlaced structure; or at least one interlace index.

For the start frequency position of the third interlaced structure, refer to the descriptions of the start frequency position of the first interlaced structure in the embodiment shown in FIG. 4. For the end frequency position of the third interlaced structure, refer to the descriptions of the end frequency position of the first interlaced structure in the embodiment shown in FIG. 4. For the quantity of interlaced units included in the third interlaced structure, refer to the descriptions of the quantity of interlaced units included in the first interlaced structure in the embodiment shown in FIG. 4. For the information about the size of the frequency resource included in the interlaced unit in the third interlaced structure, refer to the descriptions of the information about the size of the frequency resource included in the interlaced unit in the first interlaced structure in the embodiment shown in FIG. 4. For the frequency spacing between the adjacent interlaced units included in the third interlaced structure, refer to the descriptions of the frequency spacing between the adjacent interlaced units included in the first interlaced structure in the embodiment shown in FIG. 4. For the frequency spacing between the adjacent interlaced units included in the third interlaced structure, refer to the descriptions of the frequency spacing between the adjacent interlaced units included in the first interlaced structure in the embodiment shown in FIG. 4.

The foregoing several items of information may be included in the second configuration information, or a part of the foregoing several items of information may be a default value. For example, the default value is predefined in a protocol, or is preconfigured in the first UE. In this case, the second configuration information may not need to include the default value. For example, the second configuration information may include the information about the frequency spacing between the adjacent interlaced units included in the third interlaced structure and the quantity of interlaced units included in the third interlaced structure. Alternatively, either of the information about the frequency spacing between the adjacent interlaced units included in the third interlaced structure and the quantity of interlaced units included in the third interlaced structure may be a default value, and the second configuration information may include only the remaining one. For more descriptions, refer to the descriptions of the first configuration information in the embodiment shown in FIG. 4.

Optionally, in addition to the information about the start frequency position of the second resource pool and the information about the end frequency position of the second resource pool, the second configuration information (or a default value) may further include one or more of the following (or the information about the at least one third interlaced structure may include one or more of the following): information about a start frequency position of one third interlaced structure; information about an end frequency position of one third interlaced structure; information about a size of a frequency resource included in one interlaced unit in one third interlaced structure; information about a quantity of interlaced units included in one third interlaced structure; a quantity of the at least one third interlaced structure; or information about a frequency spacing between adjacent interlaced units included in one third interlaced structure. For example, if the first interlaced structure is a new interlace defined in embodiments of this application, or a structure of the first interlaced structure is a new structure defined in embodiments of this application, the second configuration information (or the default value) may include one or more of the items described in this paragraph.

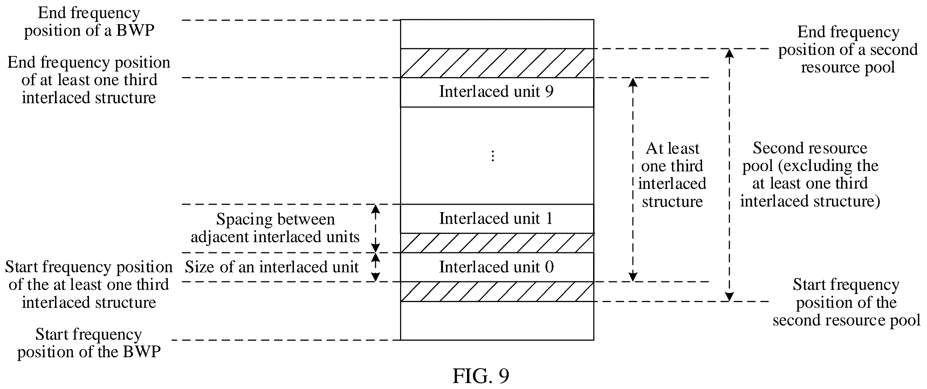

FIG. 9 is a diagram of a second resource pool. In FIG. 9, an example in which the quantity of the at least one third interlaced structure is 1, and the third interlaced structure includes 10 interlaced units is used, to show a start frequency position and an end frequency position of the third interlaced structure, a frequency spacing between adjacent interlaced units, and a size of a frequency resource included in an interlaced unit (represented as a size of the interlaced unit in FIG. 9) in the third interlaced structure. In addition, in FIG. 9, a start frequency position and an end frequency position of the second resource pool are further shown. The second resource pool does not include the at least one third interlaced structure. For example, a part (namely, a resource that does not belong to the at least one third interlaced structure) shown by slashes in FIG. 9 is a resource included in the second resource pool, and an interlaced unit in the at least one third interlaced structure is not a resource included in the second resource pool. It can be learned that a second UE can determine the second resource pool based on second configuration information, so that the second resource pool can be used by the second UE for communication.

Alternatively, an interlaced structure defined in a 5G system is used as a second interlaced structure to configure the third interlaced structure, and optionally, the second configuration information (or a default value) may further include at least one interlace index. For descriptions of the second interlaced structure, refer to the embodiment shown in FIG. 4.

The at least one interlace index included in the second configuration information may be, for example, an index of at least one second interlaced structure, and is used to determine the at least one third interlaced structure. For example, each interlace index of the at least one interlace index included in the second configuration information is associated with one second interlaced structure, and a frequency resource of the at least one second interlaced structure associated with the at least one interlace index includes a frequency resource of the at least one third interlaced structure. A first channel may include a plurality of second interlaced structures (for example, PRB-level interlaced structures defined in the 5G system in the embodiment shown in FIG. 4), and each second interlaced structure of the plurality of second interlaced structures may be associated with one interlace index. Therefore, the at least one interlace index included in the second configuration information may be used to determine the at least one second interlaced structure associated with the at least one interlace index. A frequency resource of each second interlaced structure of the at least one second interlaced structure includes a frequency resource of one third interlaced structure. For example, it may also be understood as that the at least one second interlaced structure associated with the at least one interlace index may be in one-to-one correspondence with the at least one third interlaced structure. Alternatively, it is conversely understood as that, one third interlaced structure may include all or a part of interlaced units in a second interlaced structure corresponding to the third interlaced structure. On this basis, the third interlaced structure may be determined based on a start frequency position and an end frequency position of the third interlaced structure. For example, in the frequency resource of the at least one second interlaced structure associated with the at least one interlace index, a frequency resource between the start frequency position and the end frequency position of the second resource pool is the frequency resource of the at least one third interlaced structure (for example, is all frequency resources of the at least one third interlaced structure). For this example, refer to the example of the first interlaced structure in the embodiment shown in FIG. 4.

Optionally, the foregoing process may alternatively be understood as that the second resource pool directly does not include all or a part of interlaced units in the at least one second interlaced structure, and a specific concept of the third interlaced structure may not need to be introduced.

An optional configuration manner of the at least one interlace index is as follows: For example, the second configuration information may include an index list, and the index list may include an interlace index of the at least one second interlaced structure. In this case, a third interlaced structure corresponding to the second interlaced structure indicated by the interlace index in the index list should be excluded from the second resource pool. For another example, the second configuration information may include a start interlace index and a quantity of third interlaced structures that should be excluded from the second resource pool (or equivalently, include a quantity of associated second interlaced structures), indicating that third interlaced structures starting from a third interlaced structure corresponding to a second interlaced structure of the start interlace index, to a last third interlaced structure determined based on the quantity of third interlaced structures should be excluded from the second resource pool. For example, if the start interlace index is 0, and the quantity of third interlaced structures that should be excluded from the second resource pool is 2, second interlaced structures corresponding to the third interlaced structures that should be excluded from the second resource pool are a second interlaced structure 0 and a second interlaced structure 1. For another example, if the start interlace index is 9, and the quantity of third interlaced structures that should be excluded from the second resource pool is 2, second interlaced structures corresponding to the third interlaced structures that should be excluded from the second resource pool are a second interlaced structure 9 and a second interlaced structure 0.

For indication manners of the start frequency position, the end frequency position, and the like of the third interlaced structure, refer to descriptions of the indication manners of the start frequency position, the end frequency position, and the like of the first interlaced structure in the embodiment shown in FIG. 4.

Optionally, the method may further include S802: The second UE excludes the frequency resource of the at least one third interlaced structure based on the second configuration information, to determine the second resource pool. Alternatively, S802 includes: The second UE excludes the frequency resource of the at least one third interlaced structure between the start frequency position and the end frequency position of the second resource pool based on the second configuration information, to determine the second resource pool.

The second UE can determine the start frequency position and the end frequency position of the second resource pool based on the second configuration information, and can also determine the frequency positions of the at least one third interlaced structure, so that the second UE can exclude the at least one third interlaced structure between the start frequency position and the end frequency position of the second resource pool. After the exclusion, a remaining resource between the start frequency position and the end frequency position of the second resource pool is a communication resource pool available to the second UE, namely, the second resource pool.

After the at least one third interlaced structure is excluded, frequency resources in the second resource pool may be contiguous or non-contiguous. In this case, when sending and receiving an SL communication signal by using the second resource pool, the communication UE may also perform corresponding processing based on a structure of the second resource pool. The following uses the second UE as an example to describe how the second UE sends and receives an SL communication signal by using the second resource pool.

1. In an optional implementation in which the second UE sends and receives an SL communication signal by using the second resource pool, the second UE may reset an index for a frequency resource unit in the second resource pool, to map the frequency resource unit in the second resource pool to a logical resource unit or a virtual resource unit, so that the SL communication signal is sent and received through the logical resource unit or the virtual resource unit. Optionally, the frequency resource unit is, for example, a PRB, the logical resource unit is, for example, a logical RB (logical RB, LRB), and the virtual resource unit is, for example, a virtual RB (virtual RB, VRB). In the following descriptions, an example in which the frequency resource unit is a PRB, the logical resource unit is an LRB, and the virtual resource unit is a VRB is used. However, this is not limited thereto. Therefore, a "PRB" in the following may be replaced with a "frequency resource unit", an "LRB" in the following may be replaced with a "logical resource unit", and a "VRB" in the following may be replaced with a "virtual resource unit".

Optionally, the second UE sequentially numbers, in descending or ascending order of frequencies, PRBs included in the second resource pool (namely, PRBs remaining after the third interlaced structure is excluded), to obtain LRBs or VRBs included in the second resource pool, where indexes (or numbers) of the LRBs or VRBs are consecutive. Any RB included in the second resource pool may correspond to two indexes: a physical index and a logical index (or a virtual index). In this case, there may be a mapping relationship (or a correspondence) between the physical index and the logical index of the RB included in the second resource pool. The mapping relationship may alternatively be understood as a mapping relationship between a PRB and an LRB (or a VRB) in the second resource pool. Different communication UEs may sequentially number the PRBs included in the second resource pool according to a same rule (for example, in descending order or ascending order of frequencies). Therefore, mapping relationships between a PRB and an LRB (a VRB) determined by different communication UEs may be the same.

For example, the second resource pool includes N PRBs, and the N PRBs do not include a PRB in the at least one third interlaced structure. In other words, after the at least one third interlaced structure is excluded, the second resource pool includes the N PRBs, where N is a positive integer. The N PRBs include at least one group of adjacent PRBs that are non-contiguous in frequency domain. The N PRBs each have a physical index, and physical indexes of the N PRBs are i0, i1, i2, ..., i(N-1). In addition, the first UE may reset logical indexes for the N PRBs. For example, the reset logical indexes are 0, 1, ..., (N-1). A minimum resource allocation unit of SL transmission may be a subchannel. The second resource pool may include S subchannels, where S is a positive integer. Each subchannel of the S subchannels includes M PRBs in the N PRBs, where M is a positive integer less than or equal to N. Optionally, a quantity (namely, M) of PRBs included in one subchannel or a quantity (namely, M) of LRBs corresponding to the PRBs may be configured by using configuration information of the second resource pool. An $(f+1)^{th}$ subchannel in the S subchannels included in the second resource pool may include PRBs whose indexes are $i_{f \times M}$, $i_{f \times M+1}$, ..., $i_{f \times M+M-1}$, where f is an integer ranging from 0 to S-1. For example, a $1^{st}$ subchannel in the S subchannels may include PRBs whose indexes are $i_0$, $i_1$, ..., $i_{M-1}$, and a $2^{nd}$ subchannel in the S subchannels may include PRBs whose indexes are $i_M$, $i_{M+1}$, ..., $i_{2M-1}$. The rest can be deduced by analogy.

In a conventional technology, one subchannel includes several contiguous PRBs. In embodiments of this application, a definition of the subchannel may be modified as follows: One subchannel includes several contiguous LRBs or VRBs (that is, one subchannel may include several non-contiguous PRBs). Alternatively, it may be understood as that, in embodiments of this application, a concept of the subchannel is changed into a concept of a logical subchannel or a virtual subchannel, and one logical subchannel or virtual subchannel includes several contiguous LRBs or VRBs.

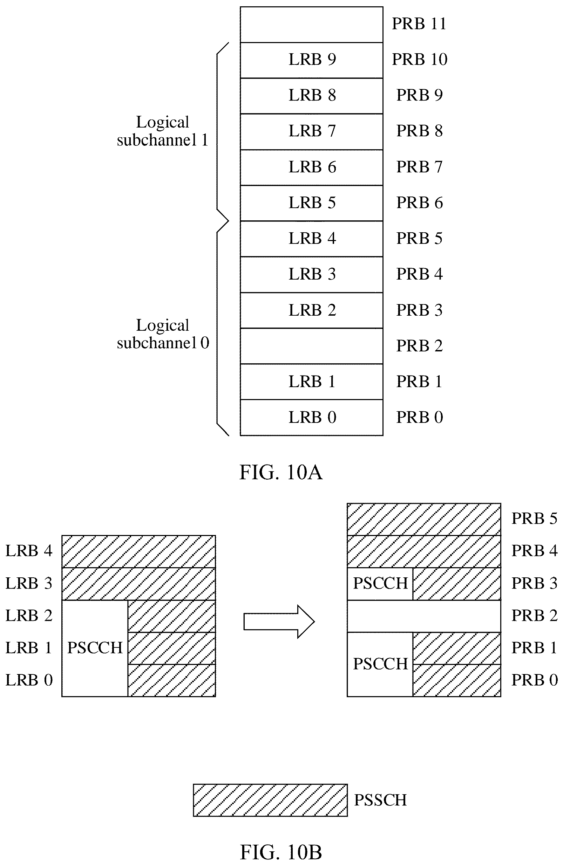

As shown in FIG. 10A, it is assumed that the first resource pool occupies PRBs such as a PRB 2 and a PRB 11 in frequency domain. To implement orthogonality between the first resource pool and the second resource pool in frequency domain, the PRBs such as the PRB 2 and the PRB 11 need to be excluded from the second resource pool. After the PRBs such as the PRB 2 and a PRB 12 are excluded, the second UE may renumber remaining available PRBs in the second resource pool to obtain LRBs. For example, in FIG. 10A, an index inside a rectangle represents an index of a PRB, and an index outside the rectangle represents an index of an LRB. A subchannel including an LRB is a logical subchannel. Each logical subchannel in FIG. 10A may include five LRBs. For example, a logical subchannel 0 includes an LRB 0 to an LRB 4 (where physical indexes corresponding to the LRB 0 to the LRB 4 are respectively i0 to i4, and i0=0, i1=1, i2=3, i3=4, and i4=5, that is, PRBs corresponding to the LRB 0 to the LRB 4 are respectively a PRB 0, a PRB 1, a PRB 3, a PRB 4, and a PRB 5), and a logical subchannel 1 may include an LRB 5 to an LRB 9 (where physical indexes corresponding to the LRB 5 to the LRB 9 are respectively i5 to i9, and i5=6, i6=7, i7=8, i8=9, and i9=10, that is, PRBs corresponding to the LRB 0 to the LRB 4 are respectively a PRB 6 to a PRB 10).

When sending and receiving a signal, the second UE may first determine an LRB or a VRB, and then determine a corresponding PRB. For example, the second UE sends or receives a first physical sidelink control channel (physical sidelink control channel, PSCCH) and a first physical sidelink shared channel (physical sidelink shared channel, PSSCH) on J subchannels. The J subchannels belong to the second resource pool, each subchannel of the J subchannels may include M LRBs, the M LRBs are in one-to-one correspondence with M PRBs, and the M PRBs belong to the N PRBs described above. J is a positive integer. The J subchannels include J×M LRBs in total. The second UE may map the first PSCCH and the first PSSCH to the J×M LRBs, and then may map, based on a correspondence between an LRB and a PRB, the first PSCCH and the first PSSCH to J×M PRBs corresponding to the J×M LRBs, to implement sending or receiving of the first PSCCH and the first PSSCH. For example, the second configuration information indicates that a PSCCH in the second resource pool includes K PRBs, where K is a positive integer, for example, K is less than or equal to M. The first PSCCH occupies, for example, K PRBs on a first subchannel, and the first subchannel is a subchannel with a lowest frequency on the J subchannels. The K PRBs may be K PRBs corresponding to K LRBs with smallest indexes in M LRBs included on the first subchannel (or equivalently, K PRBs with lowest frequencies on the first subchannel), where K is less than or equal to M.

For example, referring to FIG. 10B, a left side represents LRBs occupied by the first PSSCH and the first PSCCH, and a right side represents PRBs occupied by the first PSSCH and the first PSCCH. For a mapping relationship between an LRB and a PRB, refer to FIG. 10A. It can be learned from FIG. 10A that the PRB 2 is a PRB that is not included in the second resource pool, and therefore neither the first PSSCH nor the first PSCCH occupies the PRB 2.

2. In another optional implementation in which the second UE sends and receives an SL communication signal by using the second resource pool, when sending and receiving the SL communication signal, the second UE may exclude, from a subchannel, a resource that does not belong to the second resource pool.

In this implementation, the second UE may not need to dispose an LRB or a VRB. This simplifies a disposing process. Subchannels in the second resource pool are still divided in an original manner. However, when a subchannel includes a resource that should be excluded, the resource should be excluded from the subchannel, in other words, actual quantities of PRBs included in different subchannels may be the same or different. For example, the second resource pool includes Q subchannels, where Q is a positive integer. A quantity of PRBs included in each subchannel of the Q subchannels may be less than or equal to M. M may be set in configuration information of the second resource pool. A $q^{th}$ subchannel in the Q subchannels may include a part or all of PRBs whose indexes are (q-1)×M to q×M-1 (where a PRB whose index is 0 corresponds to a PRB at a lowest frequency position in the second resource pool). For example, a $1^{st}$ subchannel in the Q subchannels may include a part or all of M PRBs whose indexes are 0 to M-1. If the at least one third interlaced structure is not excluded from the second resource pool, the $q^{th}$ subchannel in the Q subchannels may include all the PRBs whose indexes are (q-1)×M to q×M-1. However, because the at least one third interlaced structure needs to be excluded from the second resource pool, a resource in the $q^{th}$ subchannel in the Q subchannels may be excluded, or may not be excluded. In this case, the $q^{th}$ subchannel may include a part or all the PRBs whose indexes are (q-1)×M to q×M-1.

Optionally, it should be ensured that a quantity of PRBs occupied by a PSCCH on the subchannel is K (which may be set in the configuration information of the second resource pool). When a resource that should be excluded from a subchannel conflicts with a frequency position that should be occupied by the PSCCH, the PSCCH may occupy K available PRBs (where the K PRBs may be contiguous or non-contiguous in frequency domain) with lowest frequencies on the subchannel, and does not occupy a PRB that should be excluded from the subchannel (namely, a PRB included in the third interlaced structure). Optionally, if a quantity of available PRBs included on a subchannel is less than K, the subchannel cannot be used for transmission of a PSCCH. If the second UE is a transmit end of the PSCCH, the second UE does not choose to send the PSCCH on the subchannel. If the second UE is a receive end of the PSCCH, because the second UE can know PRBs actually occupied by each subchannel in the second resource pool, the second UE may not detect the PSCCH on the subchannel.

For example, if a subchannel carries a PSCCH, a PSSCH may occupy a remaining resource on the subchannel other than a resource occupied by the PSCCH, and the second UE may determine a transport block size (transport block size, TBS) included in the PSSCH based on a quantity of PRBs included on the subchannel. For example, the second UE sends or receives the first PSCCH and/or the first PSSCH on J subchannels, where the J subchannels include E PRBs in total (where E PRBs are included in total after the at least one third interlaced structure is excluded). Both J and E are positive integers. The second UE may determine, based on E, a TBS included on the first PSSCH.

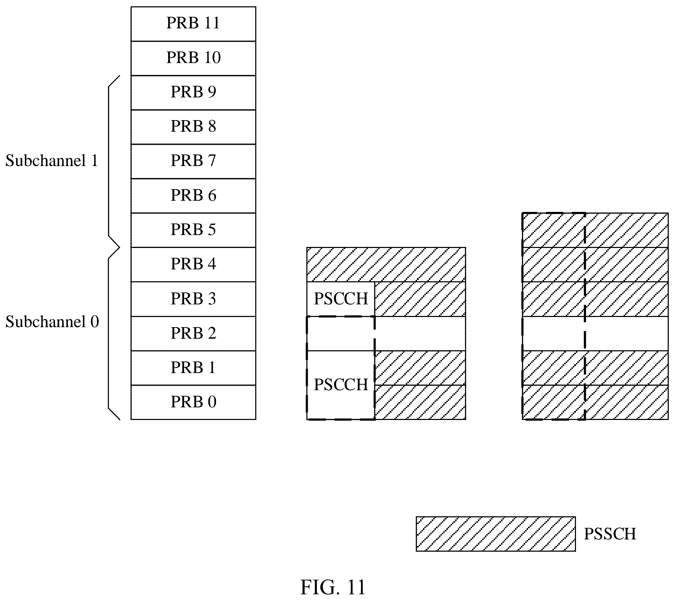

Refer to FIG. 11. It is assumed that the first resource pool occupies PRBs such as a PRB 2 and a PRB 11 in frequency domain. To implement orthogonality between the first resource pool and the second resource pool in frequency domain, the PRBs such as the PRB 2 and the PRB 11 need to be excluded from the second resource pool. If the second configuration information indicates that one subchannel in the second resource pool includes five PRBs, the second UE may determine that a subchannel 0 includes a PRB 0, a PRB 1, a PRB 3, and a PRB 4, a subchannel 1 includes a PRB 5 to a PRB 9, and so on. For example, if the second configuration information indicates that the PSCCH occupies three PRBs in frequency domain, and the PSCCH to be sent or received by the second UE is located on the subchannel 0, the PRBs occupied by the PSCCH are the PRB 0, the PRB 1, and the PRB 3, instead of the PRB 0 to the PRB 2, as shown in a middle part of FIG. 11. However, if the second configuration information indicates that the PSCCH occupies five PRBs in frequency domain, a quantity of PRBs included on the subchannel 0 is less than 5. Therefore, the subchannel 0 cannot be used for transmission of the PSCCH, and can be used for transmission of only the PSSCH, as shown in a right part of FIG.

11.

In embodiments of this application, a first resource pool having an interlaced structure in frequency domain is configured for sensing. The interlaced structure can ensure that the resource pool for sensing has a wide bandwidth, and can improve a resolution of distance estimation. In addition, the interlaced structure occupies only a part of frequency resources in frequency domain, and the remaining frequency resources may be occupied by a communication resource pool. Therefore, a capacity of the communication resource pool can also be ensured. Furthermore, the resource pool for sensing includes at least one first interlaced structure in frequency domain, and may be contiguous in time domain. Therefore, a large unambiguous Doppler estimation range can be ensured. It can be learned that the resource pool that is for sensing and that is configured in embodiments of this application can ensure a requirement of a sensing service, and can ensure a requirement of a communication service. For the communication resource pool, resources in a sensing resource pool and/or a positioning resource pool may be excluded, to reduce resource collision between different types of UEs. In addition, a corresponding solution is provided for a communication process of a communication UE, so that the communication UE can perform communication by using the second resource pool of a new structure.

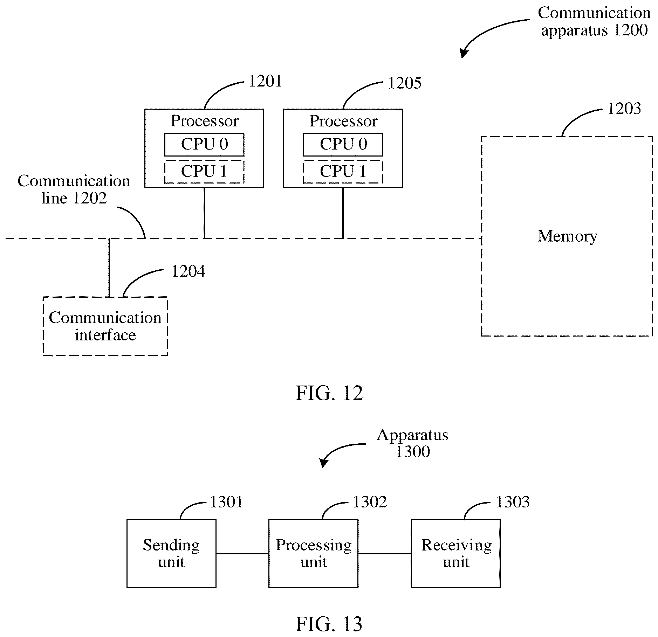

FIG. 12 is a diagram of a structure of a communication apparatus according to an embodiment of this application. The communication apparatus 1200 may be the first UE in the embodiment shown in FIG. 4 or a circuit system of the first UE, and is configured to implement the method corresponding to the first UE in the foregoing method embodiment. Alternatively, the communication apparatus 1200 may be the second UE in the embodiment shown in FIG. 8 or a circuit system of the second UE, and is configured to implement the method corresponding to the second UE in the foregoing method embodiment. For example, a circuit system is a chip system.

The communication apparatus 1200 includes at least one processor 1201. The processor 1201 may be configured to perform internal processing of the apparatus, to implement a specific control processing function. Optionally, the processor 1201 includes instructions. Optionally, the processor 1201 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1200 includes one or more memories 1203 configured to store instructions. Optionally, the memory 1203 may further store data. The processor and the memory may be separately disposed, or may be integrated together.

Optionally, the communication apparatus 1200 includes a communication line 1202 and at least one communication interface 1204. The memory 1203, the communication line 1202, and the communication interface 1204 are all optional, and therefore, are all represented by dashed lines in FIG. 12.

Optionally, the communication apparatus 1200 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement sending and receiving functions of the communication apparatus 1200 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1201 may include a general-purpose central processing unit (central processing unit, CPU), a microprocessor, an application specific integrated circuit (application specific integrated circuit, ASIC), or one or more integrated circuits configured to control program execution of the solutions in this application.

The communication line 1202 may include a path on which information is transferred between the foregoing components.

The communication interface 1204 is any apparatus like a transceiver, and is configured to communicate with another device or a communication network, for example, Ethernet, a radio access network (radio access network, RAN), a wireless local area network (wireless local area network, WLAN), or a wired access network.

The memory 1203 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of instructions or data structures and that is accessible to a computer, but is not limited thereto. The memory 1203 may exist independently and is connected to the processor 1201 through the communication line 1202. Alternatively, the memory 1203 may be integrated with the processor 1201.

The memory 1203 is configured to store computer-executable instructions for executing the solutions in this application, and the processor 1201 controls execution. The processor 1201 is configured to execute the computer-executable instructions stored in the memory 1203, to implement the steps performed by the first UE or the second UE in the embodiment shown in FIG. 4 or FIG. 8.

Optionally, the computer-executable instructions in this embodiment of this application may also be referred to as application program code. This is not specifically limited in this embodiment of this application.

During specific implementation, in an embodiment, the processor 1201 may include one or more CPUs, such as a CPU 0 and a CPU 1 in FIG. 12.

During specific implementation, in an embodiment, the communication apparatus 1200 may include a plurality of processors such as the processor 1201 and a processor 1205 in FIG. 12. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 12 is a chip, for example, a chip of the first UE or a chip of the second UE, the chip includes the processor 1201 (where the chip may further include the processor 1205), the communication line 1202, and the communication interface 1204. Optionally, the chip may include the memory 1203. Specifically, the communication interface 1204 may be an input interface, a pin, a circuit, or the like. The memory 1203 may be a register, a cache, or the like. The processor 1201 and the processor 1205 each may be a general-purpose CPU, a microprocessor, an ASIC, or one or more integrated circuits configured to control execution of a program of the resource pool configuration method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used. For example, when division into functional modules is performed based on corresponding functions, FIG. 13 is a diagram of an apparatus. The apparatus 1300 may be the first UE or the second UE in the foregoing method embodiments, or a chip in the first UE or a chip in the second UE. The apparatus 1300 includes a sending unit 1301, a processing unit 1302, and a receiving unit 1303.

It should be understood that the apparatus 1300 may be configured to implement the steps performed by the first UE or the second UE in the resource pool configuration method in embodiments of this application. For related features, refer to the embodiment shown in FIG. 4 or FIG. 8. Details are not described herein again.

Optionally, functions/implementation processes of the sending unit 1301, the receiving unit 1303, and the processing unit 1302 in FIG. 13 may be implemented by the processor 1201 in FIG. 12 by invoking the computer-executable instructions stored in the memory 1203. Alternatively, a function/an implementation process of the processing unit 1302 in FIG. 13 may be implemented by the processor 1201 in FIG. 12 by invoking the computer-executable instructions stored in the memory 1203, and functions/implementation processes of the sending unit 1301 and the receiving unit 1303 in FIG. 13 may be implemented through the communication interface 1204 in FIG. 12.

Optionally, when the apparatus 1300 is a chip or a circuit, functions/implementation processes of the sending unit 1301 and the receiving unit 1303 may alternatively be implemented through a pin, a circuit, or the like.

This application further provides a computer-readable storage medium. The computer-readable storage medium stores a computer program or instructions. When the computer program or the instructions are run, the method performed by the first UE or the second UE in the foregoing method embodiments is implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is caused to perform the method performed by the first UE or the second UE in any one of the foregoing method embodiments.

An embodiment of this application further provides a processing apparatus, including a processor and an interface. The processor is configured to perform the method performed by the first UE or the second UE in any one of the foregoing method embodiments.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Various illustrative logical units and circuits described in embodiments of this application may implement or operate the described functions by a general-purpose processor, a digital signal processor (digital signal processor, DSP), an ASIC, a field programmable gate array (field programmable gate array, FPGA) or another programmable logical apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor can read information from the storage medium and write information to the storage medium. Optionally, the storage medium may alternatively be integrated into the processor. The processor and the storage medium may be disposed in an ASIC, and the ASIC may be disposed in a terminal device. Optionally, the processor and the storage medium may alternatively be disposed in different components of a terminal device.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that in embodiments of this application, the first UE and/or the second UE may perform some or all of the steps in embodiments of this application. The steps or operations are merely examples. In embodiments of this application, other operations or variations of various operations may be further performed. In addition, the steps may be performed in a sequence different from that presented in embodiments of this application, and not all the operations in embodiments of this application may be performed.

**Claims**

1. A resource pool configuration method, applied to a first apparatus, wherein the method comprises:
   obtaining first configuration information, wherein the first configuration information is used to configure a first resource pool for the first apparatus, the first resource pool is used by the first apparatus for positioning and/or sensing, the first resource pool comprises at least one first interlaced structure in frequency domain, each first interlaced structure of the at least one first interlaced structure comprises a plurality of interlaced units, and adjacent interlaced units in the plurality of interlaced units in each first interlaced structure are non-contiguous in frequency domain.

2. The method according to claim 1, wherein any two adjacent interlaced units in the plurality of interlaced units in each first interlaced structure have a same frequency spacing.

3. The method according to claim 1 or 2, wherein each interlaced unit of the plurality of interlaced units in each first interlaced structure comprises one of the following: one physical resource block PRB, one subcarrier, a plurality of contiguous PRBs, or a plurality of contiguous subcarriers.

4. The method according to claim 3, wherein the first configuration information comprises one or more of the following:

information about a start frequency position of one first interlaced structure;
information about a size of a frequency resource comprised in one interlaced unit in one first interlaced structure;
information about a frequency spacing between adjacent interlaced units in one first interlaced structure;
a quantity of interlaced units comprised in one first interlaced structure; information about an end frequency position of one first interlaced structure;
a quantity of the at least one first interlaced structure;
information about a start frequency position of the first resource pool;
information about an end frequency position of the first resource pool; or
at least one interlace index, wherein the at least one interlace index is used to determine the at least one first interlaced structure.

5. The method according to claim 4, wherein a frequency resource of the first resource pool is located on a first channel, and the first channel comprises a plurality of second interlaced structures, wherein
each interlace index of the at least one interlace index comprised in the first configuration information is associated with one second interlaced structure, and a frequency resource of the at least one second interlaced structure associated with the at least one interlace index comprises a frequency resource of the at least one first interlaced structure in the first resource pool.

6. The method according to claim 5, wherein that the frequency resource of the at least one second interlaced structure associated with the at least one interlace index comprises the frequency resource of the at least one first interlaced structure in the first resource pool comprises:
in the frequency resource of the at least one second interlaced structure associated with the at least one interlace index, a frequency resource between the start frequency position and the end frequency position of the first resource pool is the frequency resource of the at least one first interlaced structure.

7. The method according to any one of claims 4 to 6, wherein the information about the start frequency position of the first interlaced structure comprises information about a frequency spacing between the start frequency position of the first interlaced structure and a start frequency position of a first bandwidth part BWP, wherein the first BWP is a BWP in which the first resource pool is located.

8. The method according to any one of claims 4 to 7, wherein the information about the end frequency position of the first interlaced structure comprises:

information about a frequency spacing between the end frequency position of the first interlaced structure and an end frequency position of the first BWP;
information about a frequency spacing between the end frequency position of the first interlaced structure and the start frequency position of the first interlaced structure; or
information about a frequency spacing between the end frequency position of the first interlaced structure and the start frequency position of the first BWP, wherein
the first BWP is a BWP in which the first resource pool is located.

9. The method according to any one of claims 1 to 8, wherein obtaining the first configuration information comprises:

receiving the first configuration information from a network device; and/or
obtaining the first configuration information that is preconfigured.

10. A resource pool configuration method, applied to a second apparatus, wherein the method comprises:
obtaining second configuration information, wherein the second configuration information is used to configure a second resource pool for the second apparatus, the second resource pool is used by the second apparatus for communication, the second configuration information comprises information about a start frequency position of the second resource pool, information about an end frequency position of the second resource pool, and information about at least one third interlaced structure, and the second resource pool does not comprise a frequency resource of the at least one third interlaced structure in frequency domain.

11. The method according to claim 10, wherein the method further comprises:
excluding the frequency resource of the at least one third interlaced structure between the start frequency position and the end frequency position of the second resource pool based on the second configuration information, to determine the second resource pool.

12. The method according to claim 10 or 11, wherein each third interlaced structure of the at least one third interlaced structure comprises a plurality of interlaced units, and any two adjacent interlaced units in the plurality of interlaced units in each third interlaced structure have a same frequency spacing.

13. The method according to claim 12, wherein each interlaced unit of the plurality of interlaced units in each third interlaced structure comprises one of the following: one PRB, one subcarrier, a plurality of contiguous PRBs, or a plurality of contiguous subcarriers.

14. The method according to claim 11 or 12, wherein the second configuration information further comprises one or more of the following:

information about a start frequency position of one third interlaced structure;
information about an end frequency position of one third interlaced structure;
information about a size of a frequency resource comprised in one interlaced unit in one third interlaced structure;
information about a frequency spacing between adjacent interlaced units in one third interlaced structure;
a quantity of interlaced units comprised in one third interlaced structure;
a quantity of the at least one third interlaced structure; or
at least one interlace index, wherein the at least one interlace index is used to determine the at least one third interlaced structure.

15. The method according to claim 14, wherein a frequency resource of the second resource pool is located on a first channel, and the first channel comprises a plurality of second interlaced structures, wherein
each interlace index of the at least one interlace index comprised in the second configuration information is associated with one second interlaced structure, and a frequency resource of the at least one second interlaced structure associated with the at least one interlace index comprises the frequency resource of the at least one third interlaced structure.

16. The method according to claim 15, wherein that the frequency resource of the at least one second interlaced structure associated with the at least one interlace index comprises the frequency resource of the at least one third interlaced structure comprises:
in the frequency resource of the at least one second interlaced structure associated with the at least one interlace index, a frequency resource between the start frequency position and the end frequency position of the second resource pool is the frequency resource of the at least one third interlaced structure.

17. The method according to any one of claims 10 to 16, wherein the information about the start frequency position of the second resource pool comprises information about a frequency spacing between the start frequency position of the second resource pool and a start frequency position of a first BWP, wherein the first BWP is a BWP in which the second resource pool is located.

18. The method according to any one of claims 10 to 17, wherein the information about the end frequency position of the second resource pool comprises:

information about a frequency spacing between the end frequency position of the second resource pool and an end frequency position of the first BWP;
information about a frequency spacing between the end frequency position of the second resource pool and the start frequency position of the second resource pool; or
information about a frequency spacing between the end frequency position of the second resource pool and the start frequency position of the first BWP, wherein
the first BWP is a BWP in which the first resource pool is located.

19. The method according to any one of claims 10 to 18, wherein

the second resource pool comprises N frequency resource units, the N frequency resource units are non-contiguous in frequency domain, and indexes of the N frequency resource units are $i_0$, $i_1$, ..., $i_{N-1}$, wherein N is a positive integer; and

the second resource pool comprises one or more subchannels, each subchannel of the one or more subchannels comprises M frequency resource units in the N frequency resource units, wherein M is a positive integer less than or equal to N, and an (f+1)$^{th}$ subchannel in the one or more subchannels comprises frequency resource units whose indexes are $i_{f \times M}, i_{f \times M+1}, ..., i_{f \times M+M-1}$, wherein f is an integer ranging from 0 to a quantity of the one or more subchannels minus 1.

20. The method according to claim 19, wherein the method further comprises:

sending or receiving a first physical sidelink control channel PSCCH and/or a first physical sidelink shared channel PSSCH on J subchannels, wherein each subchannel of the J subchannels comprises M logical resource units, and each logical resource unit of the M logical resource units corresponds to one frequency resource unit of the N frequency resource units, wherein J is a positive integer;
mapping the first PSCCH and the first PSSCH to J×M logical resource units comprised in the J subchannels; and mapping the first PSCCH and the first PSSCH to J×M frequency resource units based on a correspondence between the logical resource unit and the frequency resource unit.

21. The method according to claim 20, wherein the method further comprises:
the second configuration information indicates that a PSCCH in the second resource pool comprises K frequency resource units, wherein K is a positive integer, the first PSCCH occupies K frequency resource units on a first subchannel, the K frequency resource units are frequency resource units corresponding to K logical resource units with lowest frequencies in M logical resource units comprised on the first subchannel, and the first subchannel is a subchannel with a lowest frequency in the J subchannels.

22. The method according to any one of claims 10 to 18, wherein
the second configuration information comprises information indicating M, the second resource pool comprises Q subchannels, wherein Q is a positive integer, a quantity of frequency resource units comprised in each subchannel of the Q subchannels is less than or equal to M, a q$^{th}$ subchannel in the Q subchannels comprises a part or all of frequency resource units whose indexes are (q-1)×M to q×M, and any subchannel of the Q subchannels does not comprise a frequency resource unit of any third interlaced structure of the at least one third interlaced structure.

23. The method according to claim 22, wherein the method further comprises:

sending or receiving a first PSCCH and a first PSSCH on J subchannels, wherein the J subchannels comprise E frequency resource units, and the E frequency resource units do not comprise a frequency resource unit of any third interlaced structure of the at least one third interlaced structure, wherein J and E are positive integers; and determining, based on E, a transport block size TBS comprised in the first PSSCH.

24. The method according to claim 22 or 23, wherein the method further comprises:
skipping sending or skipping detecting a PSCCH on a second subchannel when a quantity of frequency resource units comprised in the second subchannel is less than K, wherein the second configuration information indicates that a PSCCH in the second resource pool comprises K frequency resource units, wherein K is a positive integer.

25. The method according to any one of claims 10 to 24, wherein obtaining the second configuration information comprises:

receiving the second configuration information from a network device; and/or obtaining the second configuration information that is preconfigured.

26. A communication apparatus, wherein the communication apparatus comprises a processing unit and a transceiver unit, and the processing unit is coupled to the transceiver unit, to perform the method according to any one of claims 1 to 9, or perform the method according to any one of claims 10 to 25.

27. A communication apparatus, wherein the communication apparatus comprises a processor and a memory, the memory is configured to store a computer program, and the processor is configured to execute the computer program stored in the memory, to cause the communication apparatus to perform the method according to any one of claims 1 to 9, or cause the communication apparatus to perform the method according to any one of claims 10 to 25.

28. A computer-readable storage medium, wherein the computer-readable storage medium is configured to store a computer program; and when the computer program is run on a computer, the computer is caused to perform the method according to any one of claims 1 to 9, or the computer is caused to perform the method according to any one of claims 10 to 25.

29. A computer program product, wherein the computer program product comprises a computer program; and when the computer program is run on a computer, the computer is caused to perform the method according to any one of claims 1 to 9, or the computer is caused to perform the method according to any one of claims 10 to 25.

30. A chip system, wherein the chip system comprises:
a processor and an interface, wherein the processor is configured to invoke instructions from the interface and run the instructions; and when the processor executes the instructions, the method according to any one of claims 1 to 9 is implemented, or the method according to any one of claims 10 to 25 is implemented.

31. A communication system, wherein the communication system comprises a first apparatus and a second apparatus, wherein

the first apparatus is configured to perform the method according to any one of claims 1 to 9; and
the second apparatus is configured to perform the method according to any one of claims 10 to 25.

| Sensing resource pool |
|---|

| Communication resource pool |
|---|

Frequency division multiplexing

| Sensing resource pool | Communication resource pool | Sensing resource pool | Communication resource pool |
|---|---|---|---|

Time division multiplexing

FIG. 1

Frequency

BWP
PRB (N–1)
⋮
PRB 1
PRB 0

Resource pool 1

Resource pool 2

Resource pool 4

Resource pool 3

Time

FIG. 2

Network device

UE 1

UE 2

FIG. 3

A first UE obtains first configuration information, where the first configuration information is used to configure a first resource pool for the first UE, the first resource pool is used by the first UE for positioning and/or sensing, the first resource pool includes at least one first interlaced structure in frequency domain, each first interlaced structure of the at least one first interlaced structure includes a plurality of interlaced units, and adjacent interlaced units in the plurality of interlaced units in each first interlaced structure are non-contiguous in frequency domain

S401

FIG. 4

...

Interlaced unit 6

Interlaced unit 5

Interlaced unit 4

One first
interlaced structure

Interlaced unit 3

Interlaced unit 2

Interlaced unit 1

Interlaced unit 0

FIG. 5

FIG. 6

EP 4 701 303 A1

...

| |
|---|
| PRB 12, second interlaced structure 2 |
| PRB 11, second interlaced structure 1 |
| PRB 10, second interlaced structure 0 |
| PRB 9, second interlaced structure 9 |
| PRB 8, second interlaced structure 8 |
| PRB 7, second interlaced structure 7 |
| PRB 6, second interlaced structure 6 |
| PRB 5, second interlaced structure 5 |
| PRB 4, second interlaced structure 4 |
| PRB 3, second interlaced structure 3 |
| PRB 2, second interlaced structure 2 |
| PRB 1, second interlaced structure 1 |
| PRB 0, second interlaced structure 0 |

⟶ CRB 0

FIG. 7A

...

| PRB 82, second interlaced structure 2 |
| PRB 81, second interlaced structure 1 |
| PRB 80, second interlaced structure 0 |

...

| PRB 23, second interlaced structure 3 |
| PRB 22, second interlaced structure 2 |
| PRB 21, second interlaced structure 1 |
| PRB 20, second interlaced structure 0 |
| PRB 19, second interlaced structure 9 |

...

Frequency spacing between an end frequency position and a start frequency position of a first resource pool

| PRB 13, second interlaced structure 3 |
| PRB 12, second interlaced structure 2 |
| PRB 11, second interlaced structure 1 |
| PRB 10, second interlaced structure 0 |
| PRB 9, second interlaced structure 9 |

Quantity of interlaced structures included in the first resource pool

...

Frequency spacing between the start frequency position of the first resource pool and a start frequency position of a BWP

| PRB 2, second interlaced structure 2 |
| PRB 1, second interlaced structure 1 |
| PRB 0, second interlaced structure 0 |  → CRB 0

FIG. 7B

A second UE obtains second configuration information, where the second configuration information is used to configure a second resource pool for the second UE, the second resource pool is used by the second UE for communication, the second configuration information includes information about a start frequency position of the second resource pool, information about an end frequency position of the second resource pool, and information about at least one third interlaced structure, and the second resource pool does not include a frequency resource of the at least one third interlaced structure in frequency domain

S801

Exclude the at least one third interlaced structure between the start frequency position and the end frequency position of the second resource pool based on the second configuration information, to determine the second resource pool

S802

FIG. 8

FIG. 9

FIG. 10A

PSSCH

FIG. 10B

| | |
|:---:|:---:|
| PRB 11 | |
| PRB 10 | |
| PRB 9 | |
| PRB 8 | |
| PRB 7 | |
| PRB 6 | |
| PRB 5 | |
| PRB 4 | |
| PRB 3 | |
| PRB 2 | |
| PRB 1 | |
| PRB 0 | |

Subchannel 1

Subchannel 0

PSCCH

PSCCH

PSSCH

FIG. 11

Communication
apparatus 1200

1201          1205                                              1203

Processor      Processor                                       Memory

CPU 0         CPU 0

CPU 1         CPU 1

Communication
line 1202

1204

Communication
interface

FIG. 12

Apparatus
1300

1301           1302           1303

Sending        Processing     Receiving
unit           unit           unit

FIG. 13

| INTERNATIONAL SEARCH REPORT | International application No. |
|---|---|
| | **PCT/CN2024/070924** |

| A. CLASSIFICATION OF SUBJECT MATTER |
|---|
| H04W72/0457(2023.01)i |
| |
| According to International Patent Classification (IPC) or to both national classification and IPC |

| B. FIELDS SEARCHED |
|---|
| Minimum documentation searched (classification system followed by classification symbols) |
| IPC:H04W, H04Q |
| |
| Documentation searched other than minimum documentation to the extent that such documents are included in the fields searched |
| |
| Electronic data base consulted during the international search (name of data base and, where practicable, search terms used) |
| CNTXT, WPABS, WPABSC, ENTXTC, VEN, VCN, 3GPP: 配置, 资源池, 定位, 感知, 交错, 频域, 不连续, 间隔, configurat ion, resource pooling, positioning, awareness, interleaving, frequency domain, discontinuity, spacing |

| C. | DOCUMENTS CONSIDERED TO BE RELEVANT | |
|---|---|---|
| Category* | Citation of document, with indication, where appropriate, of the relevant passages | Relevant to claim No. |
| Y | CN 115734371 A (HUAWEI TECHNOLOGIES CO., LTD.) 03 March 2023 (2023-03-03) description, paragraphs [0042]-[0116] | 1-31 |
| Y | CN 115835394 A (BEIJING UNISOC COMMUNICATIONS TECHNOLOGY CO., LTD.) 21 March 2023 (2023-03-21) description, paragraphs [0032]-[0097] | 1-31 |
| A | CN 114007262 A (HUAWEI TECHNOLOGIES CO., LTD.) 01 February 2022 (2022-02-01) entire document | 1-31 |
| A | WO 2022267897 A1 (HUAWEI TECHNOLOGIES CO., LTD.) 29 December 2022 (2022-12-29) entire document | 1-31 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 March 2024** | **20 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEA·······**

**Information on patent family members**

International application No.

**PCT/CN2024/070924**

| Patent document cited in search report | | | Publication date (day/month/year) | Patent family member(s) | | | Publication date (day/month/year) |
|---|---|---|---|---|---|---|---|
| CN | 115734371 | A | 03 March 2023 | WO | 2023024952 | A1 | 02 March 2023 |
| CN | 115835394 | A | 21 March 2023 | None | | | |
| CN | 114007262 | A | 01 February 2022 | None | | | |
| WO | 2022267897 | A1 | 29 December 2022 | CN | 115580383 | A | 06 January 2023 |

Form PCT/ISA/210 (patent family annex) (July 2022)

**REFERENCES CITED IN THE DESCRIPTION**

**Patent documents cited in the description**

- CN 202310576915

- CN 202310861585